# EUROPEAN PATENT APPLICATION

(11) **EP 4 709 046 A1**
(43) Date of publication of application: **11.03.2026**
(21) Application number: 24868499.5
(22) Date of filing: 26.08.2024
(51) Int. Cl.: H05B 6/12, H05B 6/06, F24C 15/34, F24C 15/10, F24C 3/12, H02M 1/10

(54) **ELECTRIC RANGE**

(30) Priority: 21.09.2023 KR 20230126657; 21.09.2023 KR 20230126658; 22.09.2023 KR 20230127458; 26.09.2023 KR 20230129155; 22.02.2024 KR 20240026117
(71) Applicant: LG Electronics Inc., Yeongdeungpo-gu Seoul 07336 (KR)
(72) Inventor: KIM, Seongjun, Seoul 08592 (KR); HONG, Jaepyo, Seoul 08592 (KR); SHIN, Eunjung, Seoul 08592 (KR)
(74) Representative: Ter Meer Steinmeister & Partner
(86) International application number: PCT/KR2024/012662
(87) International publication number: WO 2025/063520

(57) **Abstract**

One embodiment of an electric stove may comprise a plurality of ferrite modules disposed on an upper portion of an upper supporter and below a plurality of coil substrates and arranged at positions corresponding to the plurality of coil substrates, respectively. The ferrite modules may comprise: a ferrite core in which a plurality of pieces are disposed spaced apart from each other; and a core fixing part that is coupled to the upper supporter and formed by insert injection molding with the ferrite core, and that fixes the ferrite core. The shape of the core fixing part can be freely formed by insert injection molding.

## Description

### TECHNICAL FIELD

The present disclosure relates to an electric stove, and more particularly, to an induction heating type electric stove.

### BACKGROUND ART

The contents described in this section merely provides background information on the present disclosure and does not constitute the prior art.

Various types of cooking appliances are used to heat food at home or in restaurants. The above-described cooking appliance comprises a gas stove using gas and an electric stove using electricity.

Electric stoves are largely classified into a resistive heating type stove and an induction heating type stove.

The electric resistance heating type stove uses a scheme of applying a current to a metal resistance line or a non-metal heating element such as silicon carbide to generate heat, and radiating or conducting the generated heat to heat a heating target (e.g., a cooking container such as a pot or a frying pan).

The induction heating type stove uses a scheme of generating a magnetic field around a coil by applying high-frequency power to the coil, and heating the heating target made of a metal component using an eddy current generated from the generated magnetic field.

In the basic heating principle of the induction heating scheme, when a current is applied to a working coil, heat is generated while the heating target is induction-heated, and the heating target is heated by the generated heat.

In a general electric stove, an area of the coil to which power is applied is large. In addition, the heating target should be placed in a position overlapping such a large-area coil such that the heating target can be heated.

Therefore, since the coil of the electric stove occupies the large area, each heated area corresponding to each of a small number of coils having a large area is disposed in a top of the electric stove.

Since the number of heated areas is small and the size of each heated area is large, a cover plate of the electric stove having a limited area is provided with a small number of heating aeras. In addition, the area size of the heated area is large, such that even when a plurality of heated areas are provided in the electric stove, a non-heated area defined between the heated areas occupies a large area.

Due to this structure, a space in which the heating target may be placed on the electric stove becomes narrow. Even when a small object is heated, one heated area having a large area size is used, thereby increasing power consumption. This causes inconvenience to the user.

In order to compensate for this disadvantage, a coil having a plate-shaped structure with a small areas size may be disposed in the electric stove. When a plurality of coils, each having a small area size, are disposed in the electric stove, a space between the coils is reduced and only a coil on which the heating target is placed is operated, thereby increasing the space efficiency of the electric stove and reducing power consumption.

### SUMMARY OF DISCLOSURE

### TECHNICAL PURPOSE

A purpose of the present disclosure is to provide an electric stove including a ferrite module having a structure stably mounted on an upper supporter.

In addition, a purpose of the present disclosure is to provide an electric stove including a ferrite module having a structure manufactured in an insert injection molded manner to increase productivity.

In addition, a purpose of the present disclosure is to provide an electric stove having a ferrite module including a ferrite core having various shapes and a core fixing portion.

The purposes of the present disclosure are not limited to the above-mentioned purposes, and other purposes and advantages of the present disclosure that are not mentioned may be understood based on the following descriptions, and will be more clearly understood based on the embodiment of the present disclosure. In addition, it will be readily appreciated that the purposes and advantages of the present disclosure may be realized by means recited in the claims and combinations thereof.

### TECHNICAL SOLUTION

An embodiment of the electric stove may include a plurality of ferrite modules disposed on an upper supporter, disposed under a coil substrate, and disposed at positions corresponding to positions of the plurality of coil substrates, respectively. The ferrite module may include: a ferrite core in which a plurality of pieces are arranged to be spaced apart from each other; and a core fixing portion coupled to the upper supporter and fixing the ferrite core, wherein the core fixing portion and the ferrite core may be formed in an insert injection molded manner.

The shape of the core fixing portion may be freely formed in the insert injection molded manner.

The ferrite core may be formed in any one of a first type in which a portion of an upper surface of the ferrite core is provided to cover the core fixing portion, a second type in which a fixing groove for fixing the ferrite core to the core fixing portion is formed in the ferrite core, or a third type in which at least one inclined portion is formed in a corner of the ferrite core so as to fix the ferrite core to the core fixing portion.

In the first type or the second type, the ferrite core may comprise a plurality of first ferrites respectively disposed on corners of the core fixing portion provided in a rectangular shape, and a plurality of second ferrites, wherein at least one of the plurality of second ferrites is disposed between adjacent ones of the plurality of first ferrites.

Some of the second ferrites may be disposed between adjacent ones of the plurality of first ferrites so as to contact the first ferrites, wherein the others of the second ferrites may be disposed between adjacent ones of the plurality of first ferrites so as to be spaced apart from the first ferrites.

The others of the second ferrites disposed in an area where the first ferrite and the second ferrite are spaced apart from each other may include at least two second ferrites arranged to be spaced apart from each other.

The first ferrite may be formed in a square shape, the second ferrite may be formed in a rectangular shape, and a length of a long side of the second ferrite may be sized to be equal to a length of one side of the first ferrite.

In the first type, the core fixing portion may comprise a bottom plate; a bent portion bent from an end of the bottom plate; and an extension portion bent from the bent portion so as to extend to cover a portion of an upper surface of each of the first ferrite and the second ferrite.

In the second type, the core fixing portion may comprise a bottom plate; a bent portion bent from an end of the bottom plate; and a fixing protrusion bent from the bent portion so as to extend to be coupled to a fixing groove.

The fixing protrusion may include a first sub-protrusion disposed at a position at which it is coupled to the first ferrite and a second sub-protrusion disposed at a position at which it is coupled to the second ferrite, and a width of the first sub-protrusion may be sized to be greater than a width of the second sub-protrusion.

In the third type, the ferrite core may include a plurality of ferrite cores, wherein the plurality of ferrite cores may be radially arranged around a center of the core fixing portion so as to be spaced apart from each other.

The ferrite core may be formed in a rectangular shape, and the inclined portion may include a pair of inclined portions respectively formed at two corners arranged in a diagonal direction of the ferrite core.

Due to the insert injection molding, the specific shape of the core fixing portion supporting and fixing the ferrite core may be variously formed.

The ferrite module may be provided in various structures of the first type, the second type, and the third type. The types may have the differences in structure and have own features thereof.

### TECHNICAL EFFECT

In the electric stove according to the present disclosure, the ferrite core and the core fixing portion made of plastic may be formed in the insert injection molded manner and may be coupled to each other form the ferrite module. Since the shape of the core fixing portion is freely controlled in the insert injection molded manner, the core fixing portion may be easily manufactured in a shape corresponding to that of the seating groove of the upper supporter even when the ferrite pieces constituting the ferrite core are provided in various shapes.

Therefore, the ferrite pieces may be manufactured to have various shapes, and the core fixing portion may be manufactured to have a shape corresponding to that of the seating groove, so that the ferrite module may be stably coupled to and mounted on the upper supporter.

In addition, in the electric stove according to the present disclosure, the plurality of ferrite having the same or different shapes may be included in the ferrite core. The ferrite core and the core fixing portion may be formed in the insert-injection molded manner and be coupled to each other to form the ferrite module. Due to the insert injection molding, the specific shape of the core fixing portion supporting and fixing the ferrite core may be various, and the structure of the various core fixing portions may be easily formed.

Therefore, since the ferrite module of the shape corresponding to that of the seating groove of the upper supporter may be easily manufactured by combining the ferrites having various sizes and shapes with each other, the productivity of the ferrite module may be improved.

In addition, in the electric stove according to the present disclosure, the ferrite module may be provided in various structures of the first type, the second type, and the third type. The types may have the differences in structure and have own features thereof. Accordingly, the manufacturer selects and designs the type of the ferrite module suitable for the characteristics of each electric stove, thereby easily manufacturing the ferrite module, improving magnetic field generation efficiency, and reducing the manufacturing cost.

In addition to the above-described effects, specific effects of the present disclosure will be described together while describing specific matters for implementing the present disclosure.

### BRIEF DESCRIPTION OF DRAWINGS

FIG. 1 is a perspective view illustrating an electric stove according to an embodiment.
FIG. 2 is a front view illustrating an electric stove according to an embodiment.
FIG. 3A is an exploded perspective view illustrating an electric stove according to an embodiment.
FIG. 3B is an exploded perspective view illustrating an electric stove according to another embodiment.
FIG. 4A is a plan view of FIG. 1 in which a cover plate is omitted.
FIG. 4B is a diagram illustrating a coil substrate according to an embodiment.
FIG. 5 is a cross-sectional view in a direction 5-5 of FIG. 4.
FIG. 6 is a bottom view showing an electric stove according to an embodiment.
FIG. 7 is a diagram in which a casing is omitted from FIG. 6.
FIG. 8A is a perspective view illustrating an upper supporter according to an embodiment.
FIG. 8B is a perspective view illustrating an upper supporter according to another embodiment.
FIG. 9 is a plan view illustrating an upper supporter according to an embodiment.
FIG. 10 is a cross-sectional view in a direction 10-10 of FIG. 9.
FIG. 11 is a cross-sectional view in a direction 11-11 of FIG. 9.
FIG. 12 is an exploded perspective view illustrating an upper supporter and a ferrite module.
FIG. 13 is a plan view illustrating a state in which a ferrite module is coupled to an upper supporter.
FIG. 14 is a plan view illustrating a state in which a coil substrate is coupled in the state of FIG. 13.
FIG. 15 is a bottom view of the upper supporter.
FIG. 16 is a diagram illustrating a state in which an indicator board is coupled in the state of FIG. 15.
FIG. 17 is a diagram illustrating a state in which various components are coupled in the state of FIG. 16.
FIG. 18 is an exploded view of an upper supporter and a ferrite module according to an embodiment.
FIG. 19 is an exploded view of a ferrite module according to an embodiment.
FIG. 20 is a perspective view of a ferrite module according to another embodiment.
FIG. 21 is a plan view of FIG. 20.
FIG. 22 is a side view of FIG. 21.
FIG. 23 is a cross-sectional view in a direction of 23-23 of FIG. 21.
FIG. 24 is a perspective view illustrating a ferrite core according to an embodiment.
FIG. 25 is a perspective view of a ferrite module according to another embodiment.
FIG. 26 is a plan view of FIG. 25.
FIG. 27 is a side view of FIG. 25.
FIG. 28 is a cross-sectional view in a direction of 28-28 of FIG. 26.
FIG. 29 is a perspective view of a ferrite core according to another embodiment.
FIG. 30 is a plan view of FIG. 29.
FIG. 31 is a perspective view of a ferrite module according to another embodiment.
FIG. 32 is a plan view of FIG. 31.
FIG. 33 is a bottom perspective view of the ferrite module illustrated in FIG. 29.
FIG. 34 is an exploded view of an upper supporter and the ferrite module shown in FIG. 29.
FIG. 35 is a cross-sectional view of a portion of the electric stove.

### DETAILED DESCRIPTIONS

The above-mentioned purposes, features, and advantages will be described in detail later with reference to the attached drawings, so that those skilled in the art in the technical field to which the present disclosure belongs may easily practice the technical ideas of the present disclosure. In describing the present disclosure, when it is determined that a detailed description of the publicly known technology related to the present disclosure may unnecessarily obscure the gist of the present disclosure, the detailed description thereof will be omitted. Hereinafter, a preferred embodiment according to the present disclosure will be described in detail with reference to the attached drawings. In the drawings, identical reference numerals are used to indicate identical or similar components.

Although first, second, etc. are used to describe various components, these components are not limited by these terms. These terms are merely used to distinguish one component from another component. Thus, unless specifically stated to the contrary, the first component may be the second component.

As used herein, unless otherwise stated, each component may be provided as one or more components.

The above-mentioned purposes, features, and advantages will be described in detail later with reference to the attached drawings, so that those skilled in the art in the technical field to which the present disclosure belongs may easily practice the technical ideas of the present disclosure. In describing the present disclosure, when it is determined that a detailed description of the publicly known technology related to the present disclosure may unnecessarily obscure the gist of the present disclosure, the detailed description thereof will be omitted. Hereinafter, a preferred embodiment according to the present disclosure will be described in detail with reference to the attached drawings. In the drawings, identical reference numerals are used to indicate identical or similar components.

Although first, second, etc. are used to describe various components, these components are not limited by these terms. These terms are merely used to distinguish one component from another component. Thus, unless specifically stated to the contrary, the first component may be the second component.

As used herein, unless otherwise stated, each component may be provided as one or more components.

As used herein, the singular constitutes "a" and "an" are intended to include the plural constitutes as well, unless the context clearly indicates otherwise. Further, the terms "comprise", "comprising", "include", and "including" as used herein should not be construed as necessarily including all of various components or steps as described herein, and may be construed as excluding some components or some steps thereof. It will be further understood that the terms "comprise", "comprising", "include", and "including" as used herein specify presence of a component or a step, but do not preclude the presence or addition of another component or step.

Throughout the present disclosure, "A and/or B" means A, B, or A and B, unless otherwise specified, and "C to D" means C inclusive to D inclusive unless otherwise specified.

Throughout the present disclosure, "upward direction", "downward direction", or "up-down direction" refers to the upward, downward, or up-down direction of the electric stove in a state in which the electric stove is installed to be used on a daily basis. " Both lateral direction" or "lateral direction" means a direction orthogonal to the up-down direction. Both lateral direction or lateral direction may comprise "left-right direction" and "front-rear direction", and the left-right direction and the front-rear direction are orthogonal to each other.

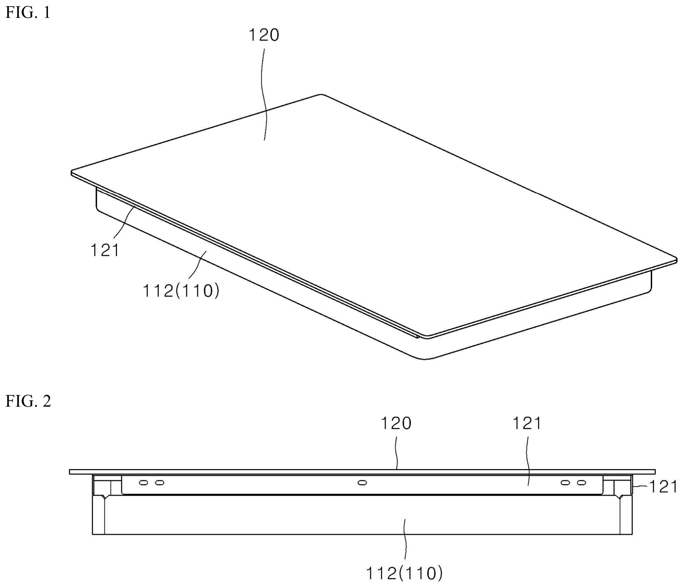

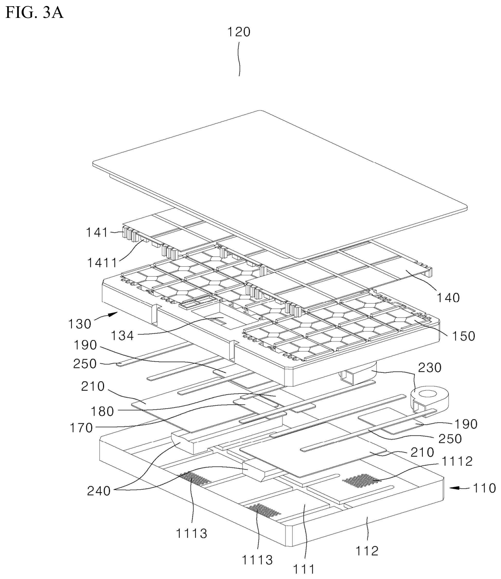

FIG. 1 is a perspective view illustrating an electric stove according to an embodiment. FIG. 2 is a front view illustrating an electric stove according to an embodiment. FIG. 3A is an exploded perspective view illustrating an electric stove according to an embodiment.

The electric stove according to the embodiment may heat an heating target in an induction heating manner. In this regard, a heating target may be, for example, a dish containing a metal material such as stainless steel or iron.

In the induction heating manner, high frequency power is applied to a working coil 140a to generate a magnetic field around the working coil 140a, and an eddy current generated from the generated magnetic field is used to heat the heating target made of a metal component.

That is, when the working coil 140a and a ferrite material are disposed to be adjacent to each other and high-frequency power is applied to the working coil 140a, the working coil 140a and the ferrite may generate a magnetic field via electromagnetic interaction therebetween.

When the magnetic field is generated around the working coil 140a and the heating target is placed in the area of the generated magnetic field, an eddy current is induced in the heating target under the magnetic field and the Joule's heat is generated from the eddy current, so that the heating target may be heated. The dish as the heating target is heated such that the food contained in the heating target may be heated and cooked.

The electric stove according to an embodiment may comprise a casing 110, a cover plate 120, an upper supporter 130, a coil substrate 140, and a ferrite module 150.

The casing 110 may function to protect components constituting the electric stove. For example, the casing 110 may be made of an aluminum material. However, embodiments of the present disclosure are not limited thereto. In one example, the casing 110 may be thermally insulated to suppress heat generated from the coil substrate 140 from being discharged to the outside.

The casing 110 may accommodate therein components constituting the electric stove, and an upper portion thereof is opened, and the open portion thereof may be closed with the cover plate 120. The casing 110 may be formed by processing a plate-shaped material into a box shape.

The casing 110 may comprise a bottom plate 111 and a sidewall 112. The bottom plate 111 may define a bottom surface of the casing 110. The bottom plate 111 may support the internal components of the electric stove.

The sidewall 112 may be bent from the bottom plate 111 to define an accommodation space of the components. The sidewall 112 may be bent upwardly from an edge of the bottom plate 111 to define a side surface of the electric stove.

The sidewall 112 may be disposed at each of four sides of the bottom plate 111 generally formed in a quadrangular shape. The sidewall 112 may reinforce the rigidity of the entire casing 110. That is, the sidewall 112 formed to be bent from the bottom plate 111 may prevent the plate-shaped bottom plate 111 to be bent or damaged by the weight of the received components or an external force.

In addition, the cover plate 120 may be coupled to a top of the sidewall 112. In this way, the casing 110 and the cover plate 120 are coupled to each other to close the inner space of the casing 110, and the inner space in which various components are disposed may be defined inside the casing 110.

The cover plate 120 may be coupled to an upper end of the casing 110, and the heating target may be disposed on an upper surface thereof. The cover plate 120 may close the open upper portion of the casing 110 to protect the components accommodated in the casing 110.

The heating target is placed on the upper surface of the cover plate 120, and the magnetic field generated from the coil substrate and the ferrite module 150 may pass through the cover plate 120 to reach the heating target. The cover plate 120 may be made of, for example, a material including ceramic. However, embodiments of the present disclosure are not limited thereto.

The cover plate 120 may be made of, for example, a glass material, and may be manufactured to be transparent or translucent so that light irradiated from an indicator board 250 passes therethrough.

An input interface 160 for receiving an input from a user may be installed in the electric stove. The input interface 160 may be installed to overlap a specific area of the cover plate 120 and may display a specific image.

For example, the input interface 160 may be embedded in the cover plate 120 in a flat manner or may be installed to contact a lower surface of the cover plate 120.

The input interface 160 may receive a touch input from the user, and the electric stove may operate based on the received touch input.

For example, the input interface 160 refers to a module for the user to input a heating intensity or a heating time desired by the user, and may be implemented as a physical button or a touch panel.

For example, the input interface 160 may be a thin film transistor liquid crystal display (TFT LCD). However, embodiments of the present disclosure are not limited thereto.

The cover plate 120 may be provided with a cover frame 121 for coupling the upper supporter 130 and the cover plate 120 to each other. The cover frame 121 may be formed adjacent to an edge of the cover plate 120 and protrude downwardly from the cover plate 120 so as to face a side plate 136 of the upper supporter 130.

When the cover plate 120 is coupled to the upper supporter 130, the cover frame 121 may be disposed to surround an outer side surface of the side plate 136 of the upper supporter 130. A hole may be formed in the cover frame 121, and a protrusion may be formed on the upper supporter 130 at a position corresponding to a position of the hole.

Accordingly, at a position where the cover frame 121 and the side plate 136 of the upper supporter 130 laterally overlap each other, the protrusion of the upper supporter 130 may be inserted into the hole of the cover frame 121 so that the cover plate 120 and the upper supporter 130 may be coupled to each other.

The upper supporter 130 may be disposed under the cover plate 120 and may be accommodated in the casing 110. The upper supporter 130 may be accommodated in the casing 110, and various components used for operating the electric stove may be coupled thereto.

The coil substrate 140 and the ferrite module 150 generating the magnetic field may be disposed on an upper surface on the upper supporter 130. In addition, various circuit boards used to operate the electric stove and a cooling device for cooling the circuit boards may be disposed under the upper supporter 130.

In order that a large number of such components are disposed thereon, the upper supporter 130 may have a complex shape. Therefore, the upper supporter 130 may be easily manufactured in a complex shape by injection molding, for example, a plastic material. A detailed structure of the upper supporter 130 will be described in detail below.

The coil substrate 140 may be disposed on an upper surface of the upper supporter 130 and may include a plurality of coil substrates spaced apart from each other in the lateral direction, and the working coil 140a may be printed thereon.

The general working coil 140a is manufactured by spirally winding the coil. Regarding the working coil 140a, the entire working coil 140a may be enlarged to wind the coil. The large working coil 140a lowers the spatial efficiency of the heated area of the electric stove and increases power consumption.

In an embodiment, the coil substrate 140 on which the working coil 140a is printed may be used. The coil substrate 140 may be provided in a manner in which the working coil 140a is printed on the coil substrate 140, rather than in a manner in which the working coil 140a is wound around the coil substrate 140.

When the working coil 140a is printed on the coil substrate 140, the working coil 140a may be printed densely in a small area, and the working coils 140a may be printed so as to be spaced apart from each other in the up-down direction of the board to form multiple layers.

Accordingly, when the working coil 140a is printed on the coil substrate 140, the area of the coil substrate 140 may be reduced and the length of the working coil 140a may be sufficiently extended compared to the manner in which the working coil 140a is wound. Accordingly, the coil substrate 140 provided with the working coil 140a having a small area may be manufactured.

In addition, since the coil substrate 140 has a thin film shape, the coil substrate 140 provided with the working coil 140a may have a very slim shape compared to that in the manner in which the working coil 140a is wound.

Accordingly, in the embodiment, using the coil substrate 140 on which the working coil 140a is printed, the volume occupied with the working coil 140a may be reduced and a total length of the working coil 140a may be sufficiently extended. Accordingly, the entire electric stove may be manufactured to be slim.

As shown in FIG. 3A, compared to a manner in which the working coil 140a is wound, in an embodiment, a very large number of coil substrates 140, each having a small area, may be disposed in the electric stove. Accordingly, a plurality of working coils 140a may be densely arranged in the electric stove.

The coil substrates 140 may be arranged with each other without a gap being defined with the adjacent coil substrates 140, compared to the manner in which the working coil 140a is wound. Due to this structure, the plurality of coil substrates 140 may be densely arranged in the electric stove without an empty space.

Accordingly, an empty space free of the working coil 140a may be minimized in an area where the coil substrate 140 is disposed, such that a large number of heating targets may be simultaneously heated, thereby improving the space efficiency of the electric stove.

In addition, the working coil 140a is printed on the coil substrate 140, such that it is not necessary to form the working coil 140a in a circular shape. For example, the working coil 140a may be printed in a spiral manner and in a generally rectangular shape corresponding to the shape of the rectangular coil substrate 140.

Due to the above-described structure, the working coil 140a having a very great total length may be provided. In addition, the working coils 140a may be densely arranged the coil substrate 140, and the working coils 140a may be separated from each other and operate independently from each other.

Accordingly, only the working coils 140a in an area at least partially overlapping with the heating target may operate to generate the magnetic field, and the remaining working coils 140a may not operate. Due to this structure, the user may freely place the heating target anywhere on the cover plate 120.

Accordingly, convenience is provided to the user. Further, the working coil 140a that does not overlap the heating target does not operate, such that power consumption may be significantly reduced.

The ferrite module 150 may be disposed on top of the upper supporter 130, may be disposed under the coil substrate 140, and may include a plurality of ferrite modules positioned at positions respectively corresponding to the plurality of working coils 140a.

The working coil 140a is printed on the coil substrate 140. Thus, when high-frequency power is applied to the working coil 140a, the magnetic field may be generated around the ferrite module 150 and the coil substrate 140, and the generated magnetic field may generate the eddy current in the heating target.

The ferrite module 150 may be disposed under the coil substrate 140. The number of the ferrite modules may correspond to the number of the working coils 140a and the positions thereof may correspond to positions of the working coils 140a. In another example, the plurality of working coils 140a may correspond to one ferrite module 150. In this regard, all of the plurality of working coils 140a may be disposed to overlap one same ferrite module 150 in the up-down direction.

In the embodiment, the ferrite module 150 may be provided in a generally rectangular shape.

The ferrite module 150 may be formed by insert injection molding of a ferrite material and a plastic material. In this regard, in one ferrite module 150, a plurality of pieces of ferrite materials may be arranged to be spaced apart from each other. The ferrite module 150 will be described in detail below.

Various boards provided with various control devices and electric circuits for the operation of the electric stove may be provided in the electric stove. The boards may comprise a main board 170, an electro magnetic interference (EMI) filter 190, a switched mode power supply (SMPS) board 180, an inverter board 210, a resonator substrate 220, and an indicator board 250.

The main board 170 may be provided with a controller for controlling the electric stove. The main board 170 may receive power from an external power source and may be configured to communicate with an external device in a wired or wireless manner.

The EMI filter 190 may suppress electromagnetic interference generated from electricity. The EMI filter 190 may receive AC power from an external power source. In addition, the EMI filter 190 may reduce noise of the received AC power (i.e., Electro Magnetic Interference (EMI)), and may provide the noise-reduced AC power to the SMPS board 180.

The SMPS board 180 may supply electricity to the electric stove. The SMPS board 180 may receive AC power with reduced noise from the EMI filter 190. In addition, the SMPS board 180 may rectify the received AC power into DC power, and may provide the rectified DC power to the inverter board 210.

The inverter board 210 may apply a resonant current to the working coil 140a. The inverter board 210 may comprise an inverter that applies a resonant current to the working coil 140a via a switching operation. A plurality of inverters may be provided, and the switching operation of the inverter may be controlled by a controller disposed on the main board 170.

In this regard, the inverter may receive the DC power from the SMPS board 180 and perform a switching operation based on the received DC power to apply a resonant current to the working coil 140a.

In addition, two switching elements may be comprised in the inverter, and the two switching elements may be alternately turned on and turned off based on a switching signal provided from the controller. In addition, an alternating current of a high frequency (that is, a resonant current) may be generated from the switching operation of the two switching elements, and the generated alternating current of the high frequency may be applied to the working coil 140a.

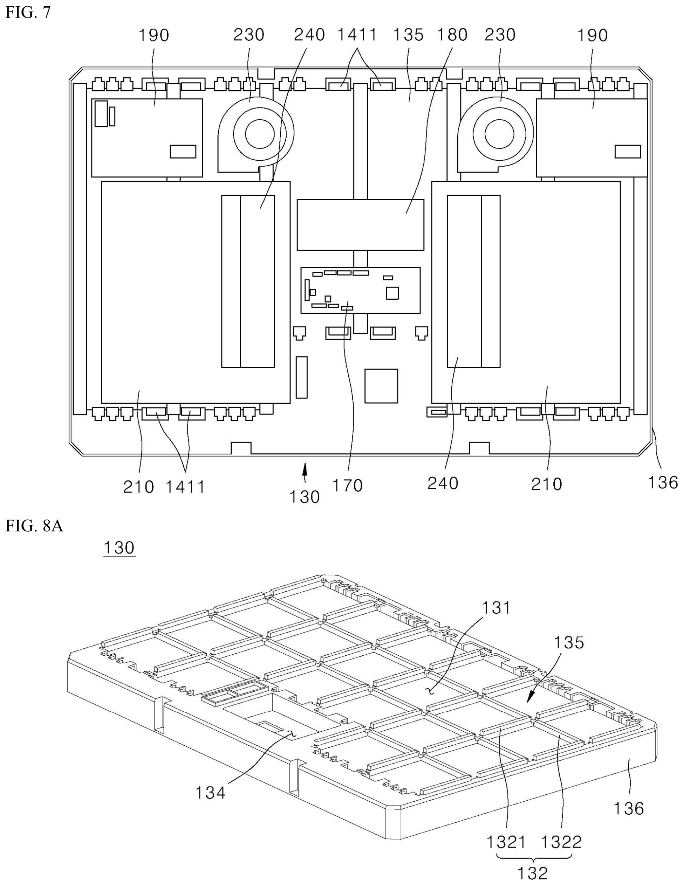

Referring to FIGS. 3A and 7, the inverter board 210 according to an embodiment may comprise a resonant capacitor. That is, the inverter board 210 illustrated in FIG. 3A has a structure in which the inverter and the resonant capacitor are integrated with each other.

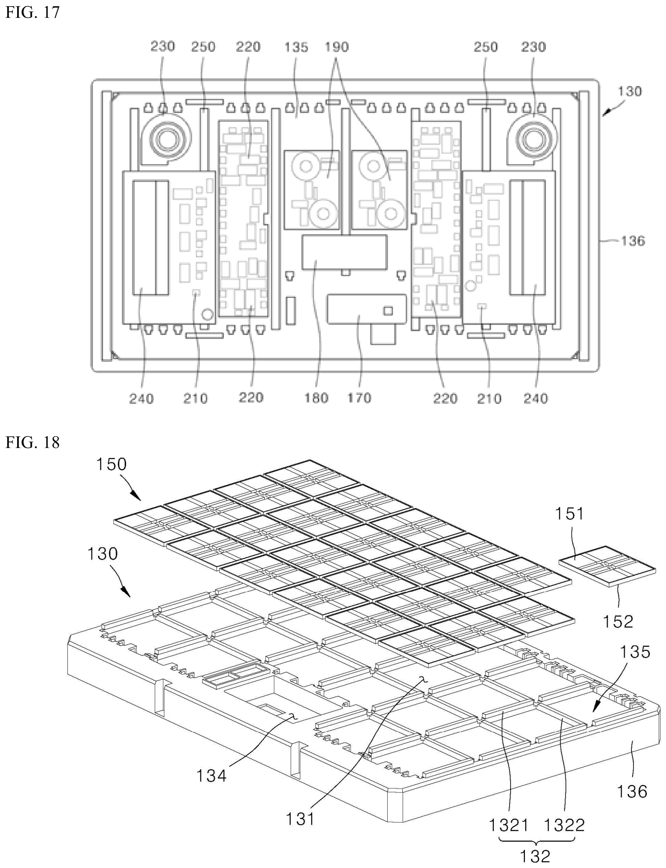

Referring to FIG. 17, the inverter board 210 according to another embodiment may comprise only the inverter without including the resonant capacitor. In this regard, a separate resonator substrate 220 including the resonant capacitor may be provided in the electric stove.

Hereinafter, the resonator substrate 220 and the resonant capacitor will be described first. The resonant capacitor is electrically connected to the inverter. When a resonant current is applied to the working coil 140a by a switching operation of the inverter, resonance of the resonant capacitor starts.

In addition, when the resonant capacitor resonates, the current flowing through the working coil 140a connected to the resonant capacitor increases. That is, through such a process, the eddy current may be induced in the heating target disposed on top of the working coil 140a connected to the resonant capacitor.

A plurality of resonant capacitors may be provided. In the case of an integrated structure in which both the inverter and the resonant capacitor are disposed in the inverter board 210, the resonant capacitor may be disposed to be spaced apart from the inverter in the inverter board 210

In another example, when the inverter board 210 and the resonator substrate 220 are separated from each other and exist separately, the resonant capacitor may be disposed in the resonator substrate 220.

The indicator board 250 may comprise a light source. The light source may be provided, for example, in a form in which a plurality of LEDs are arranged in a row.

The indicator board 250 may be turned on when the electric stove is operated to inform the user of whether the heating unit is operated. In addition, the indicator board 250 may change the lighting shape, color, etc. of the plurality of LEDs to inform the user of the operating state of the electric stove.

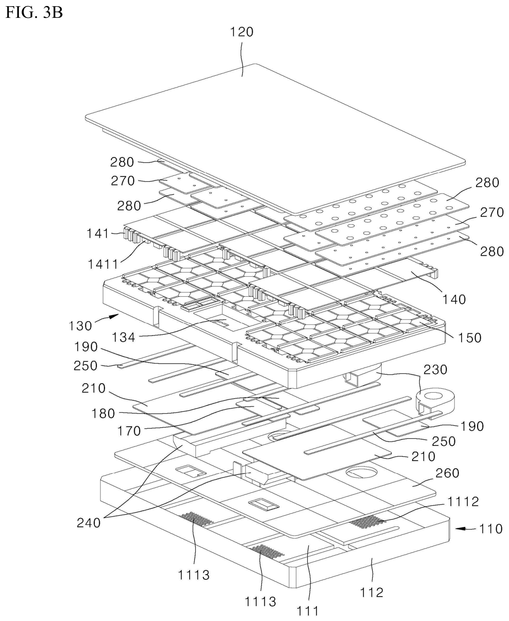

FIG. 3B is an exploded perspective view illustrating an electric stove according to another embodiment. The electric stove may comprise a lower supporter 260 disposed on top of the bottom plate 111 of the casing 110. The lower supporter 260 may be disposed under the upper supporter 130, accommodated in the casing 110, disposed under the boards coupled to a lower surface of the upper supporter 130, and may support the upper supporter 130.

The lower supporter 260 may be formed in a plate shape, and holes may be formed therein in positions corresponding to positions of inlet holes 1112 and outlet holes 1113 formed in the bottom plate 111 to be described later, respectively, so that the air flows through the inlet holes 1112 and the outlet holes 1113 formed in the bottom plate 111.

The plurality of boards, a blower fan 230, a heat sink 240, the ferrite module 150, and the coil substrate 140 may be disposed on the upper supporter 130, and the upper supporter 130 may support the loads of these components. Since the plurality of components are coupled to the upper supporter, the upper supporter 130 may be deformed so as to sag downwardly due to the load of these components.

Accordingly, the lower supporter 260 may be disposed under the upper supporter 130 to support the upper supporter 130 to which the plurality of components are coupled, thereby preventing the upper supporter 130 from sagging downwards.

When the electric stove has been assembled, the lower supporter 260 may be disposed at a position spaced apart from the lower supporter 260 in the up-down direction by a spacing sufficient for the lower supporter to support the elements having a relatively large volume provided in the various boards, and the blower fan 230 and the heat sink 240 having a larger volume than other components.

Protrusions for supporting the upper supporter 130 or components coupled to the lower surface of the upper supporter 130 may protrude upwardly from an upper surface of the lower supporter 260. In one example, protrusions for supporting the lower supporter 260 may protrude upwardly from an upper surface of the bottom plate 111 of the casing 110.

The various boards may be disposed on top of the lower supporter 260. Accordingly, it is necessary to prevent electric leakage and electrical short circuit by electrically insulating the boards that may contact the lower supporter 260 from the bottom plate 111 of the casing 110 made of a material such as aluminum.

Accordingly, the lower supporter 260 may be made of an electrically insulating material and may be disposed between the bottom plate 111 of the casing 110 and the boards to electrically insulate the boards from the bottom plate 111. The lower supporter 260 may be made of, for example, a mica material, which is an electrically insulating material.

The electric stove may comprise an thermal insulator 270 and a mica sheet 280. The thermal insulator 270 may be disposed between the upper supporter 130 and the cover plate 120 to suppress heat transfer from the heating target to the upper supporter 130.

Heat generated by heating the heating target may pass through the cover plate 120 and be transmitted to the upper supporter 130 and various components coupled thereto disposed inside the electric stove.

Such heat transfer heats the inside of the electric stove, and in particular, may adversely affect the operation of the electric stove when it is transferred to the various boards. Therefore, the thermal insulator 270 is disposed between the cover plate 120 and the upper supporter 130 to suppress heat transfer from the heating target into the electric stove, thereby preventing heating of the internal components and improving the operation performance of the electric stove.

The thermal insulator 270 may be made of, for example, a carbon material having good thermal insulation performance even when being manufactured to have a relatively small thickness. However, embodiments of the present disclosure are not limited thereto.

The thermal insulator 270 may be formed in a plate shape and include a plurality of thermal insulators to cover the coil substrates 140, respectively. The thermal insulators 270 may be spaced from each other in a longitudinal direction of the electric stove as viewed as a whole, and may be integrally formed with each other in a transverse direction thereof. That is, a longitudinal direction of one thermal insulator 270 may be parallel to the transverse direction of the electric stove.

The mica sheet 280 may be disposed between the upper supporter 130 and the cover plate 120, and may be disposed on at least one of an upper surface or a lower surface of the thermal insulator 270.

In the embodiment shown in FIG. 3B, the mica sheet 280 is disposed on each of both the upper and lower surfaces of the thermal insulator 270. In another embodiment, the mica sheet 280 may be disposed only on one of the upper surface or the lower surface of the thermal insulator 270.

The mica sheet 280 may be provided in a shape corresponding to that of the thermal insulator 270. Accordingly, the mica sheets 280 may be spaced from each other in the longitudinal direction of the electric stove as viewed as a whole, and may be integrally formed with each other in the transverse direction thereof. That is, the longitudinal direction of one mica sheet 280 may be parallel to the transverse direction of the electric stove.

The mica sheet 280 is made of a mica material, and the mica sheet 280 together with the thermal insulator 270 may suppress the heat transfer from the heating target to the upper supporter 130 inside the electric stove. In addition, the mica sheet 280 may be disposed to be in contact with the thermal insulator 270 to suppress the thermal insulator 270 from being damaged by impact.

In particular, since the thermal insulator 270 made of carbon is vulnerable to impact and is easily damaged, the mica sheet 280 may support the thermal insulator 270 to suppress the damage of the thermal insulator 270, thereby increasing the durability of the thermal insulator 270.

In one example, each of the thermal insulator 270 and the mica sheet 280 in an area where the input interface 160 is disposed may be formed to have a shorter length than that of each of the thermal insulators 270 and the mica sheets 280 in an area where the input interface 160 is not disposed so as not to screen the input interface 160,and thus may non-overlap the input interface 160. Hereinafter, unless otherwise stated, the embodiment as shown in FIG. 3B will be described.

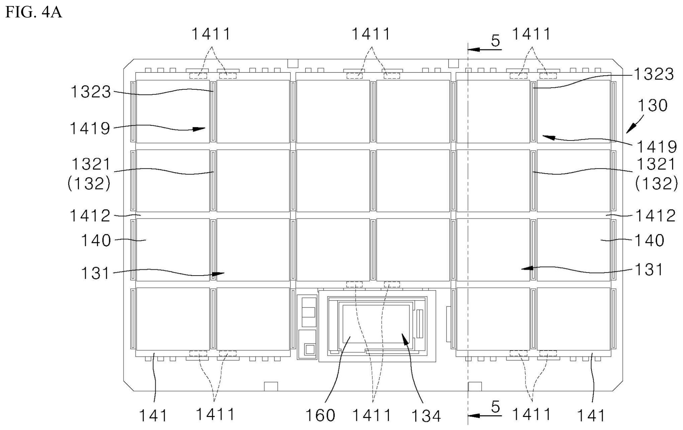

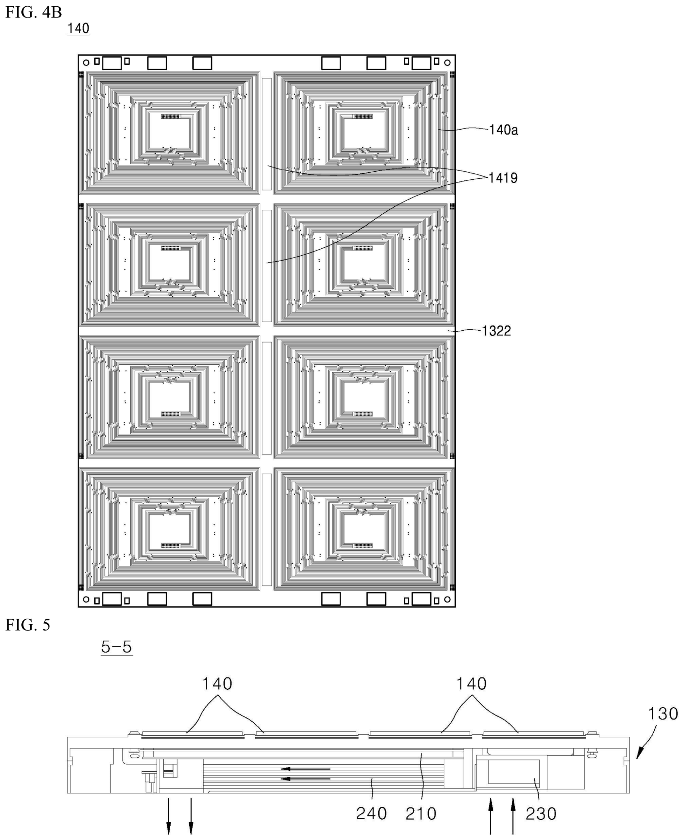

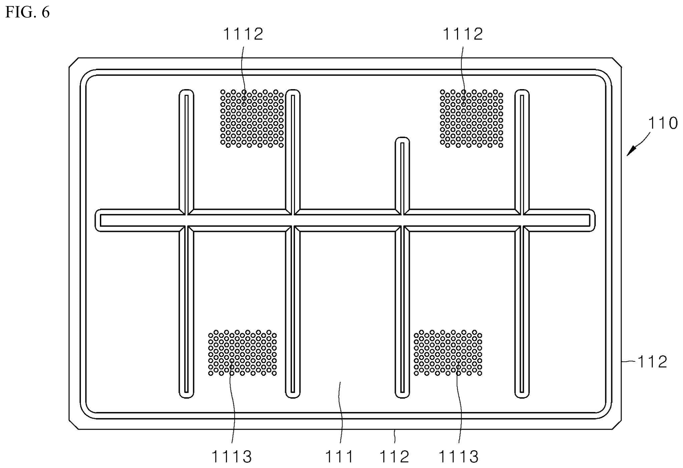

FIG. 4A is a plan view in which the cover plate 120 is omitted from FIG. 1. FIG. 4A is a diagram illustrating the coil substrate 140 according to an embodiment. FIG. 5 is a cross-sectional view in a direction 5-5 of FIG. 4A. FIG. 6 is a bottom view showing an electric stove according to an embodiment.

Elements that generate heat during operation of the electric stove may be mounted on the various boards.

For example, the switching elements in charge of on/off control in the electric stove have high heat generation. Therefore, these elements should be subject to forced cooling in order to suppress the occurrence of shutdown or failure of the electric stove due to overheating thereof.

To this end, the electric stove may comprise the blower fan 230 and the heat sink 240. The blower fan 230 and the heat sink 240 may serve to cool the various heated boards and other components.

The blower fan 230 may be coupled to the lower surface of the upper supporter 130 and may be disposed at a position spaced apart from the boards. The blower fan 230 may be provided to face the heat sink 240 and discharge air thereto. The blower fan 230 may be electrically connected to the main board 170, and an operation thereof may be controlled by the controller provided in the main board 170.

The heat sink 240 may be disposed under the upper supporter 130, and may be oriented in which the longitudinal direction thereof is parallel to the air discharge direction in which the blower fan 230 discharge the air. The heat sink 240 may be coupled to the lower surface of the inverter board 210.

In an embodiment, the inverter board 210 includes a pair of inverter boards spaced apart from each other. Thus, the heat sink 240 may include a pair of heat sinks respectively coupled to the pair of inverter boards 210. In a corresponding manner to the pair of heat sinks 240, the blower fan 230 may include a pair of blower fans disposed at positions corresponding to the pair of heat sinks 240, respectively.

A plurality of cooling fins may be formed in the heat sink 240, and an air flow path through which air passes may be formed therein and extend in a direction parallel to the longitudinal direction thereof. Accordingly, the air discharged from the outlet of the blower fan 230 cools the heat sink 240 while flowing along and on the outer surface of the heat sink 240 and through the internal air flow path, and accordingly, the inverter board 210 may be effectively cooled.

The heat sink 240 may be coupled to the inverter board 210 to increase the heat dissipation area of the inverter board 210 so that the inverter board 210 may be effectively cooled by air flowing under the operation of the blower fan 230.

Since the inverter which is a switching element is provided in the inverter board 210, the inverter consumes a relatively large amount of power, so that the inverter may be heated to a higher temperature than a temperature to which other elements may be heated. Therefore, the heat sink 240 may be coupled to the inverter board 210 to effectively cool the inverter.

The air flowing under the operation of the blower fan 230 flows through an entire area under the lower supporter 260, such that the other boards other than the inverter board 210 may also be cooled by the air forcibly flowing, so that the inside of the electric stove may be entirely cooled.

As illustrated in FIG. 6, the bottom plate 111 of the casing 110 may comprise an inlet hole 1112 and an outlet hole 1113. The inlet hole 1112 may be formed at a position corresponding to a position of the blower fan 230, and air may be introduced into the inlet hole 1112 from the outside.

The outlet hole 1113 may be formed at a position corresponding to that of an air discharge area of the heat sink 240, and air may be discharged from the outlet hole 1113. The outlet hole 1113 may be formed at a position adjacent to an air outlet of the air flow path formed in the heat sink 240. Since the heat sink 240 is provided as the pair of heat sinks and the blower fan 230 is provided as the pair of blower fans, the inlet hole 1112 may be provided as a pair of inlet holes and the outlet hole 1113 may be provided as a pair of outlet holes.

The working coil 140a may be formed in multiple layers on the coil substrate 140. For example, the multiple layers of the coils may be printed on the coil substrate 140 such that the uppermost one of the layers may be composed of a sensing coil for sensing the heating target, and the remaining layers thereunder may be composed of the plurality of working coils 140a.

FIG. 4B illustrates a cross-section of an layer of the working coil 140a disposed on the coil substrate 140 and disposed under the sensing coil.

In FIG. 4B, the working coil 140a has a general rectangular shape and is formed in a spiral shape. Due to this structure, the working coil 140a may be densely printed while having a shape corresponding to each of a rectangular seating groove 131 and the ferrite module 150, thereby increasing the total length of the working coil 140a.

However, in another example, the working coil 140a may be formed in a polygonal shape, a circular shape, or an elliptical shape.

As described above, one working coil 140a illustrated in FIG. 4A may constitute a single layer, and the plurality of working coils 140a may respectively constitute the plurality of layers spaced apart from each other in the up-down direction while being disposed on the coil substrate 140. However, for clear illustration, hereinafter, each of the plurality of working coils 140a overlapping with each other in the up-down direction and respectively constituting the plurality of layers may be referred to as one same working coil 140a.

As illustrated in FIG. 4B, the plurality of working coils 140a may be disposed on one coil substrate 140 and may be arranged in the lateral direction of the coil substrate 140.

In FIG. 4B, for example, one coil substrate 140 on which two working coils 140a arranged in a transverse direction thereof are printed and four working coils 140a arranged in a longitudinal direction thereof are printed is illustrated. However, embodiments of the present disclosure are not limited thereto, and the size of the coil substrate 140 and the number of working coils 140a printed on one coil substrate 140 may vary in consideration of the shape or size of the entire electric stove and the ease of assembly or disassembly thereof.

In one example, a through-hole 1419 may be formed in one coil substrate 140 and between the working coils 140a adjacent to each other. A first piece 1321 of the upper supporter 130 may be fitted into the through-hole 1419. As the first piece 1321 is fitted into the through-hole 1419, the coil substrate 140 may be placed in a designed position. The through-hole 1419 may have a shape corresponding to that of each of the first piece 1321 and the slit 1323 of the upper supporter 130.

In addition, due to this structure, the slit 1323 formed in the first piece 1321 is not blocked by the coil substrate 140, and light irradiated from the indicator board 250 may pass through the slit 1323 of the upper supporter 130 and pass through the cover plate 120.

One working coil 140a may be disposed in an area corresponding to one ferrite module 150 and may overlap therewith in the up-down direction. That is, one working coil 140a may be disposed to correspond to one ferrite module 150.

In this regard, a coil boundary 1412 may be provided between the working coils 140a adjacent to each other. A longitudinal direction of the coil boundary 1412 intersects a longitudinal direction of the through-hole 1419. In this regard, the through-hole 1419 is not formed in the coil boundary 1412.

The lower surface of the coil substrate 140 is supported by a second piece 1322, and in this regard, the coil boundary 1412 may be disposed at a position corresponding to a position of the second piece 1322 of a boundary rib 132.

In FIG. 5, a flow direction of air is illustrated by an arrow. When the blower fan 230 operates, air may be introduced into the electric stove from the outside through the inlet hole 1112. A portion of the introduced air may pass on and along the outer surface of the heat sink 240 and through the air flow path formed inside the heat sink 240, and the rest of the introduced air may be entirely diffused inside the casing 110 of the electric stove.

The air forcibly flowing inside the casing 110 may be discharged to the outside through the outlet hole 1113. In particular, the inverter board 210 to which the heat sink 240 is coupled may be well cooled by the forced flow of air. Therefore, the inverter which is the switching element heated to a high temperature, may be effectively cooled by the heat sink 240 and air.

In an embodiment, the blower fan 230 is coupled to the lower surface of the upper supporter 130, the heat sink 240 is coupled to the inverter board 210, and the inverter board 210 is coupled to the lower surface of the upper supporter 130. As a result, both the blower fan 230 and the heat sink 240 as the cooling devices are coupled to the upper supporter 130, such that a separate structure for coupling the blower fan 230 and the heat sink 240 to each other may not be provided in the casing 110.

Therefore, the support structure of the electric stove is generally simplified, thereby simplifying the structure of the electric stove and reducing a manufacturing cost.

In addition, a structure in contact with the blower fan 230 and the heat sink 240 is omitted from the casing 110, such that assembly and disassembly of the casing 110 may be facilitated, and repair of the electric stove may be facilitated.

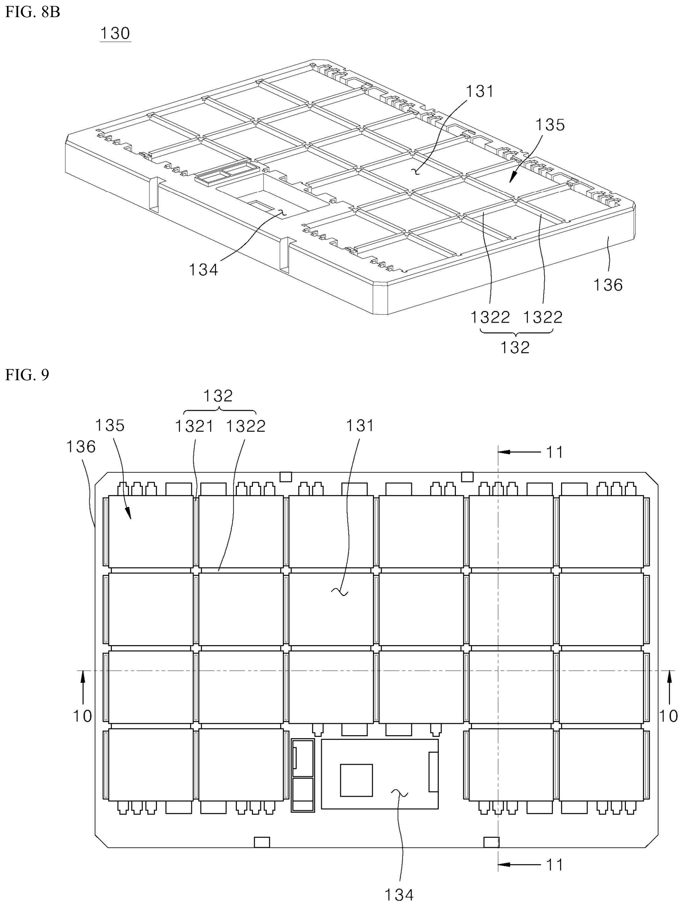

FIG. 7 is a diagram in which the casing 110 is omitted from FIG. 6. FIG. 8A is a perspective view illustrating the upper supporter 130 according to an embodiment. FIG. 8B is a perspective view illustrating an upper supporter according to another embodiment.

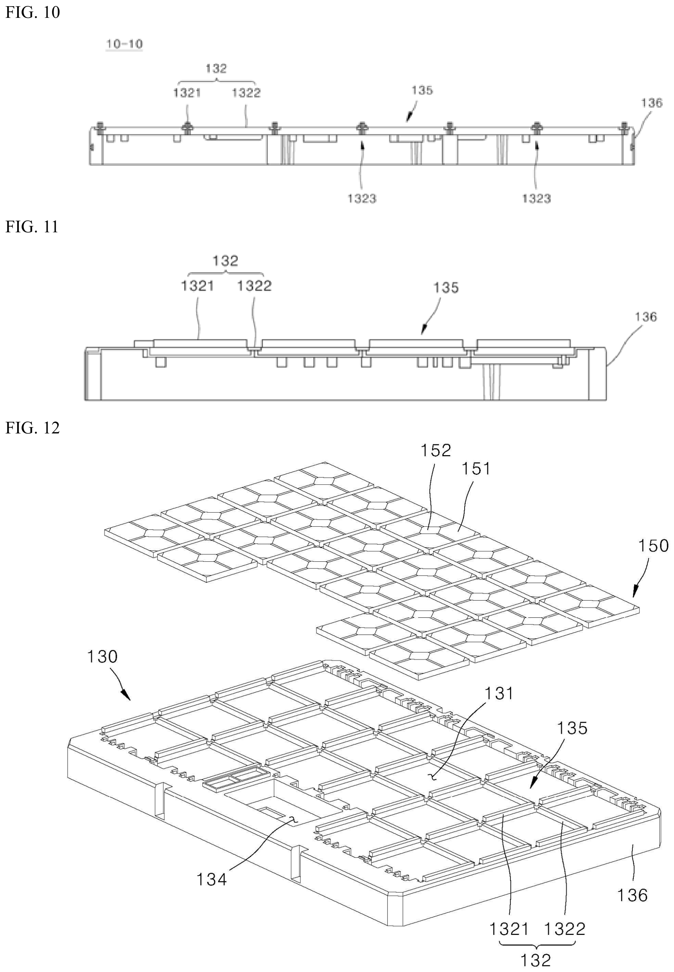

FIG. 9 is a plan view illustrating the upper supporter 130 according to an embodiment. FIG. 10 is a cross-sectional view in a direction 10-10 of FIG. 9. FIG. 11 is a cross-sectional view in a direction 11-11 of FIG. 9.

The upper supporter 130 may be generally formed in a plate shape, and may be provided in a structure in which a plurality of seating grooves 131 are formed to be convex downwardly.

The upper supporter 130 may be, for example, injection-molded so that the entire upper supporter 130 may be manufactured as one body. In another embodiment, the upper supporter 130 may be provided as a plurality of pieces of upper supporters separated from each other, and the plurality of pieces of upper supporters 130 may be assembled with each other and mounted inside the electric stove.

The upper supporter 130 may comprise a flat plate 135 extending in a direction parallel to a lateral direction of the electric stove, and a side plate 136 bent downwardly from an edge of the flat plate 135. The ferrite module 150 and the coil substrate 140 may be disposed on the flat plate 135, and the side plate 136 may support the flat plate 135 while being disposed under the edge of the flat plate 135.

The flat plate 135 of the upper supporter 130 may have a ventilation hole extending through the upper supporter 130 in an area other than the seating groove 131 in which the ferrite module 150 and the coil substrate 140 are seated. Such a ventilation hole may be formed, for example, at an edge of the flat plate and at a point where the first piece 1321 and the second piece 1322 of the boundary rib 132 intersect each other.

A portion of the air forcedly flowing along the area under the upper supporter 130 under the operation of the blower fan 230 passes through the ventilation hole and flows to an area on top of the upper supporter 130, thereby effectively cooling the ferrite module 150 and the coil substrate 140 disposed on the upper surface of the upper supporter 130, thereby suppressing overheating thereof.

The upper supporter 130 may comprise the seating groove 131 and the boundary rib 132.

The seating groove 131 may be formed by recessing the flat plate 135. The seating groove may include a plurality of seating grooves arranged in the longitudinal and transverse directions of the upper supporter 130, so that each of the plurality of ferrite modules 150 is seated in each of the plurality of seating grooves. The seating groove 131 is generally formed in a quadrangular shape, and thus, each of the coil substrate 140 and the ferrite module 150 having a quadrangular shape may be fitted into the seating groove 131.

In one example, in another embodiment, the seating grooves 131 may be arranged in a zigzag manner in the upper supporter 130 in a plan view, and may not necessarily be arranged in the transverse direction and the longitudinal direction of the upper supporter 130. For example, when the coil substrate 140 has a hexagonal shape, the plurality of seating grooves 131 may be arranged in a honeycomb-shaped zigzag manner.

The boundary rib 132 may define a boundary of each of the plurality of seating grooves 131, may be provided to protrude upwardly from the upper surface of the upper supporter 130, and may include a plurality of boundary ribs.

The boundary rib 132 may comprise the first piece 1321 and the second piece 1322. The first piece 1321 may extend in the transverse direction of the upper supporter 130. The second piece 1322 may extend in the longitudinal direction of the upper supporter 130 so as to intersect the extension direction of the first piece 1321.

Referring to FIG. 4A, the first piece 1321 may extend in the transverse direction of the upper supporter 130 and the second piece 1322 may extend in the longitudinal direction of the upper supporter 130. The first piece 1321 and the second piece 1322 may intersect each other, such that the upper surface of the upper supporter 130 may be entirely formed in a grid shape.

The slit 1323 may be formed in the first piece 1321. The slit 1323 may extend through the upper supporter 130 in the up-down direction and may be formed in a narrow and elongate hole shape in a plan view. The indicator board 250 may be disposed at a position corresponding to a position of the upper supporter 130 where the slit 1323 is formed.

Accordingly, the first piece 1321 and the slit 1323 extend in the transverse direction of the upper supporter 130, such that the length direction of the indicator board 250 may also be parallel to the transverse direction of the upper supporter 130.

The light source of the indicator board 250 emits light in an upward direction, and the irradiated light passes through the slit 1323 and passes through the cover plate 120 made of glass, so that the user may see the irradiated light.

Both the slit 1323 and the indicator board 250 extend in a parallel manner to the transverse direction of the upper supporter 130. The silts are spaced apart from each other and the indicator boards 250 are spaced apart from each other. Thus, the user may see the irradiated light in a form that the light extends in an elongated manner in the transverse direction and the light beams are spaced apart from each other in the longitudinal direction.

The first piece 1321 may be formed to have a relatively great height, and the second piece 1322 may be formed to have a smaller height than that of the first piece 1321. The slit 1323 is formed in the first piece 1321 and the light passing through the slit 1323 needs to be clearly visible to the user without being diffused. For this reason, the first piece 1321 may be formed to have a relatively larger vertical length so that the light does not spread until it passes through the upper surface of the cover plate 120.

The thermal insulator 270 and the mica sheet 280 disposed on top of the first piece 1321 are spaced from each other via the slit 1323. Thus, the thermal insulator 270 and the mica sheet 280 do not screen the slit 1323, and thus the light passing through the slit 1323 may directly reach the cover plate 120.

The second piece 1322 may be formed to have a relatively smaller vertical length, and the thermal insulator 270 and the mica sheet 280 may be disposed on top of the second piece 1322. The thermal insulator 270 or the mica sheet 280 may have a length direction parallel to the transverse direction of the upper supporter 130.

Accordingly, each of the thermal insulator 270 and the mica sheet 280 may be integrally formed as a single body extending in the transverse direction of the upper supporter 130. The thermal insulators 270 may be arranged to be spaced from each other in the longitudinal direction, and the mica sheets 280 may be arranged to be spaced from each other in the longitudinal direction. The thermal insulators 270 may be spaced from each other via the first piece 1321 as a boundary therebetween. The mica sheets 280 may be spaced from each other via the first piece 1321 as a boundary therebetween.

That is, the plurality of thermal insulators 270 may be separated from each other via the first piece 1321 while the mica sheets 280 may be separated from each other via the first piece 1321. Each of the thermal insulator 270 and the mica sheet 280 may be disposed on top of the second piece 1322. Accordingly, the second piece 1322 may be formed to have a relatively smaller vertical length to define a space in which the thermal insulator 270, the mica sheet 280, and the coil boundary 1412 of the coil substrate 140 are disposed.

In one example, in another embodiment, as shown in FIG. 8B, the boundary rib 132 may be composed only of the second piece 1322 extending in both the longitudinal and transverse directions. However, even in this case, the slit 1323 may be formed in the second piece 1322 at a position corresponding to a position of the indicator board 250.

The ferrite module 150 may comprise a ferrite core 151 and a core fixing portion 152. The ferrite core 151 may generate a magnetic field. When high-frequency power is applied to the working coil 140a printed on the coil substrate 140, a magnetic field may be generated around the ferrite core 151, and the generated magnetic field may generate an eddy current in the heating target.

The ferrite core 151 may be mounted in the core fixing portion 152 such that the ferrite core 151 may be fixed to the seating groove 131. The core fixing portion 152 may be coupled to the upper supporter 130, may be formed by insert injection molding as the ferrite core 151 may be, and may fix the ferrite core 151.

The core fixing portion 152 may define an outer shape of the ferrite module 150 and may be generally formed in a quadrangular shape. In one example, the ferrite core 151 may be formed in a plurality of pieces and may be coupled to the core fixing portion 152 via insert injection molding. Accordingly, the ferrite module 150 may generally have a rectangular shape.

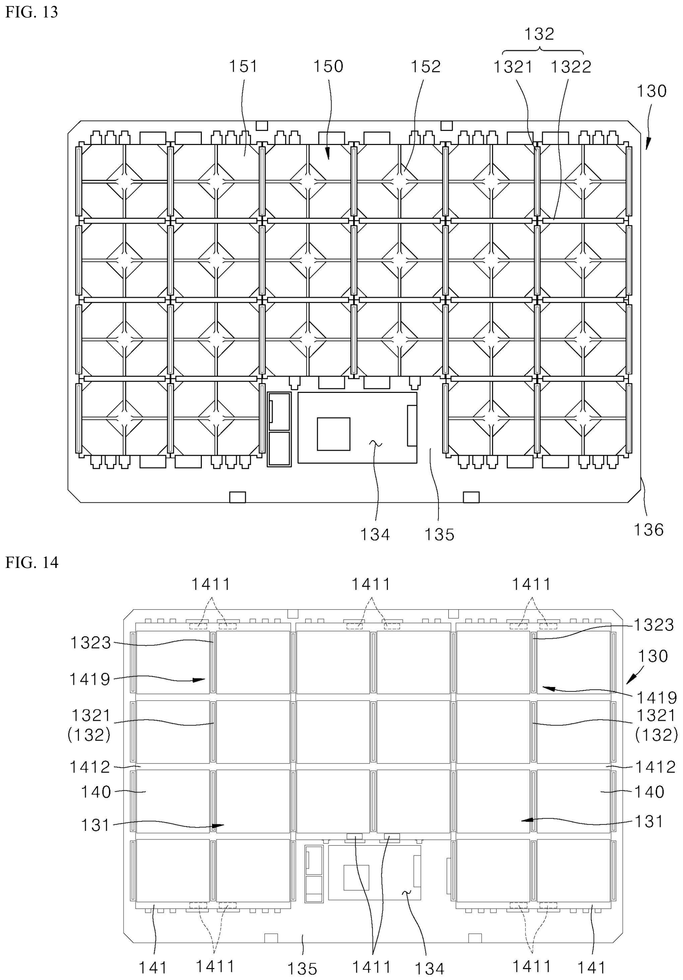

FIG. 12 is an exploded perspective view illustrating the upper supporter 130 and the ferrite module 150. FIG. 13 is a plan view illustrating a state in which the ferrite module 150 is coupled to the upper supporter 130. FIG. 14 is a plan view illustrating a state in which the coil substrate 140 is coupled in the state of FIG. 13.

As shown in FIGS. 12 to 14, the ferrite module 150 may be mounted in the seating groove 131 formed on the upper surface of the upper supporter 130. Next, after the ferrite module 150 is mounted in the seating groove, the coil substrate 140 may be mounted on the upper supporter 130. In this order, the mounting of the coil substrate 140 on the upper supporter 130 may be completed.

The coil substrate 140 and the ferrite module 150 may be provided to be supported by at least one of a side surface or a bottom surface of the seating groove in a state of being placed in the seating groove 131.

Each ferrite module 150 may be independently inserted into each seating groove 131. When each of the ferrite modules 150 is inserted into the seating groove 131, a side surface of the ferrite module 150 may be supported by a side surface of the seating groove. In addition, the side surface of the ferrite module 150 may be more stably supported by the first piece 1321 and the second piece 1322 of the boundary rib 132.

When the coil substrate 140 is placed on the upper surface of the upper supporter 130, the lower surface of the coil substrate 140 may be supported by the second piece 1322 of the boundary rib 132. In this regard, the coil boundary 1412 of the coil substrate 140 may be positioned on an upper surface of the second piece 1322.

The first piece 1321 of the boundary rib 132 may be fitted into the through-hole 1419 of the coil substrate 140. Accordingly, the coil substrate 140 may be placed in a designed position, and may be supported by the first piece 1321 to suppress lateral movement of the upper supporter 130.

A substrate coupling portion 141 may be provided to stably mount the coil substrate 140 to the upper supporter 130. The substrate coupling portion 141 may be coupled to the coil substrate 140, and may couple the coil substrate 140 to the upper supporter 130. The substrate coupling portion 141 may be integrally formed with the coil substrate 140 or may be separately manufactured and be coupled to the coil substrate 140.

The substrate coupling portion 141 may be formed to protrude from a side end extending in the longitudinal direction of the coil substrate 140. The protruding substrate coupling portion 141 may be coupled to the upper supporter 130 by a fastening means such as a screw bolt.

A connection pin 1411 may be provided at an edge of the coil substrate 140. When the coil substrate 140 is coupled to the upper supporter 130 using the substrate coupling portion 141, a terminal formed on the upper supporter 130 and the connection pin 1411 may be in contact with each other, and accordingly, the connection pin 1411 and the terminal of the upper supporter 130 may be electrically connected to each other.

The terminal of the upper supporter 130 may be electrically connected to other electrical components via a cable or the like.

In an embodiment, the ferrite module 150 may be easily and stably mounted on the upper supporter 130 by the seating groove 131 formed in the upper surface of the upper supporter 130 and the boundary rib 132 formed to surround the seating groove 131.

In addition, the first piece 1321 is fitted into the coil substrate 140, such that the coil substrate 140 may be placed in a designed position when the coil substate is mounted on the upper supporter 130. The coil substrate is prevented from moving in the lateral direction of the upper supporter 130, that is, in the longitudinal and transverse directions of the upper supporter 130, such that the coil substrate 140 may be easily assembled to the upper supporter 130.

The electric stove may comprise the input interface 160 seated on the upper surface of the upper supporter 130. The input interface 160 may be coupled to the upper supporter 130. To this end, the upper supporter 130 may comprise a receiving groove 134 formed by recessing the upper surface thereof downward. The input interface 160 is inserted into the receiving groove 134.

The receiving groove 134 may be formed in a generally rectangular shape in a corresponding manner to a shape of the input interface 160 having the rectangular shape. Each of the receiving groove 134 and the input interface 160 may be disposed in a center of a front area of the electric stove so that the user may easily manipulate the input interface from the user's point of view.

A hole through which a cable or the like may pass may be formed in a portion under the receiving groove 134. The cable may establish electrical connection between the input interface 160 and other components.

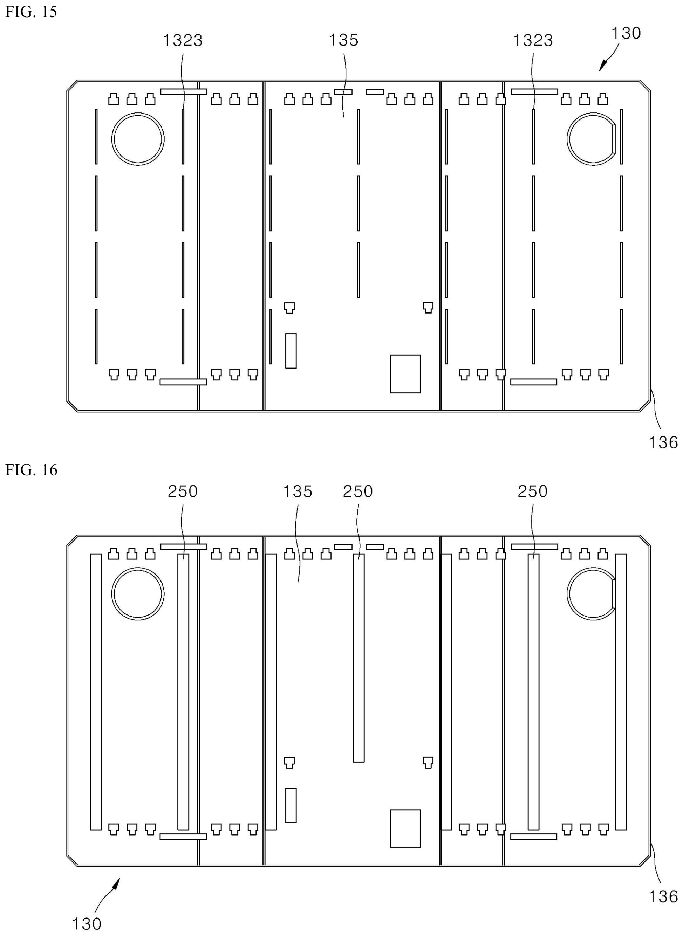

FIG. 15 is a bottom view of the upper supporter 130. FIG. 16 is a diagram illustrating a state in which the indicator board 250 is coupled in the state of FIG. 15. FIG. 17 is a diagram illustrating a state in which various components are coupled in the state of FIG. 16.

The various boards may be coupled to the lower surface of the upper supporter 130. These boards may be coupled thereto, by, for example, a fastening means such as a screw bolt.

The main board 170 may be coupled to the lower surface of the upper supporter 130 and may have the controller for controlling the electric stove.

The SMPS board 180 may be coupled to the lower surface of the upper supporter 130 and may supply electricity to the electric stove. A pair of SMPS boards 180 may be provided to supply electricity to the plurality of working coils 140a.

The EMI filter 190 may be coupled to the lower surface of the upper supporter 130 and may suppress electromagnetic interference generated from electricity. Since the EMI filter 190 is electrically connected to the SMPS board 180, the pair of SMPS filters may be provided in a corresponding manner to the pair of PCBs 180, respectively.

The inverter board 210 may be coupled to the lower surface of the upper supporter 130, and may apply the resonant current to the working coil 140a. A pair of inverter boards 210 may be provided to supply the resonant current to the plurality of working coils 140a.

In one example, as illustrated in FIG. 17, an electric stove in which the inverter board 210 and the resonator substrate 220 are separated from each other may be provided. The resonator substrate 220 may be coupled to the lower surface of the upper supporter 130, may be disposed to be separated from the inverter board 210, and may comprise the resonant capacitor.

As such, the various boards necessary for the operation of the electric stove may be disposed on the lower surface of the upper supporter 130. In this regard, the boards may be disposed on the lower surface of the upper supporter 130 and at positions spaced apart from each other.

Each of the boards may be coupled to the lower surface of the upper supporter 130 in an inverted manner. That is, elements occupying a relatively large volume among the elements disposed on each board may be disposed on a lower surface of the board.

Due to this structure, the various boards may be easily coupled to the lower surface of the upper supporter 130 without obstacles.

In one example, the indicator board 250 may be coupled to the lower surface of the upper supporter 130, may be provided as a plurality of indicator boards spaced apart from each other, and may comprise a light source. Unlike the other boards, the indicator board 250 may be disposed at a position partially overlapping other boards.

The indicator board 250 may be formed in a bar shape, and the longitudinal direction thereof may be in parallel with the transverse direction of the upper supporter 130.

Referring to FIGS. 15 and 16, each of the slits 1323 formed in the upper supporter 130 may be formed such that the longitudinal direction thereof is parallel to the transverse direction of the upper supporter 130. The slits may be arranged in a line in the transverse direction of the upper supporter. In addition, the slits 1323 may be arranged to be spaced apart from each other in the longitudinal direction of the upper supporter 130.

The indicator board 250 may be disposed at a position overlapping the slit 1323 through which light passes. Accordingly, the indicator board 250 may be disposed on the lower surface of the upper supporter 130 and may cover the slit 1323.

Accordingly, the indicator board 250 may be disposed such that the longitudinal direction thereof is parallel to the transverse direction of the upper supporter 130, and may be provided as the plurality of indicator boards spaced apart from each other in the longitudinal direction of the upper supporter 130.

Except for the indicator board 250, the various boards for operating the electric stove described above may be coupled to the lower surface of the upper supporter and be spaced apart from each other. The pair of boards may be arranged to be spaced apart from each other.

In addition, the blower fan 230 constituting the cooling device may be disposed on the lower surface of the upper supporter 130 and at a position spaced apart from the boards. In one example, the heat sink 240 constituting the cooling device may be coupled to the upper supporter 130 so as to be coupled to the lower surface of the inverter board 210.

In an embodiment, the ferrite module 150 and the coil substrate 140 may be coupled to the upper surface of the upper supporter, and the various boards for operating the electric stove and the cooling device may be coupled to the lower surface of the upper supporter.

As described above, most of the electric components such as the boards which operate upon receiving electricity and are involved in the operation of the electric stove, the blower fan 230, etc. may be coupled to the upper supporter 130. Due to this structure, the assembly performance and the disassembly performance of the electric stove may be significantly improved.

That is, when assembling the electric stove, the ferrite module 150, the coil substrate 140, and the input interface 160 may be first assembled on the upper surface of the upper supporter 130, while the various boards and the cooling devices may be assembled on the lower surface of the upper supporter 130.

Next, the thermal insulator 270 and the mica sheet 280 are placed on top of the upper supporter 130, the lower supporter 260 is placed under the upper supporter 130, and then the cover plate 120 and the casing 110 are coupled to each other, thereby completing the assembly of the electric stove.

In this regard, since the casing 110 does not have a support structure for supporting the components coupled to the upper supporter 130, it is not necessary to align these components to the support structure, and thus the assembly of the casing 110 may be very easy.

Similarly, when the casing 110 and the cover plate 120 are disassembled from each other and the lower supporter 260 is disassembled therefrom to repair the electric stove, the repairing person may immediately access the upper supporter 130 to which the various components are coupled, and abnormal components may be easily replaced.

In addition, since the ferrite modules 150 are respectively inserted into the seating grooves 131 of the upper supporters 130 in an separated manner from each other, only the ferrite module 150 having an abnormality may be replaced, so that the repair work of the electric stove may be easily performed.

In one example, referring to FIGS. 15 to 17, the operation of assembling the various components onto the lower surface of the upper supporter 130 may be performed in the following order. First, the indicator board 250 may be coupled onto the lower surface of the upper supporter 130 at a position where the slit 1323 is formed so as to cover the slit 1323.

Next, the various boards and the blower fan 230 may be placed on the lower surface of the upper supporter 130 at designed positions, and may be fastened to the upper supporter 130. In this regard, the heat sink 240 may be coupled to the inverter board 210. The various boards except for the heat sink 240 and the indicator board 250 may be coupled onto the lower surface of the upper supporter 130 and at the positions spaced apart from each other.

Next, a cable coupling operation for electrical connection between the various electrical components and electrical connection of the electrical components with an external power source may be performed.

In addition, the disassembly operation may be performed in the reverse order of the above-described assembly operation.

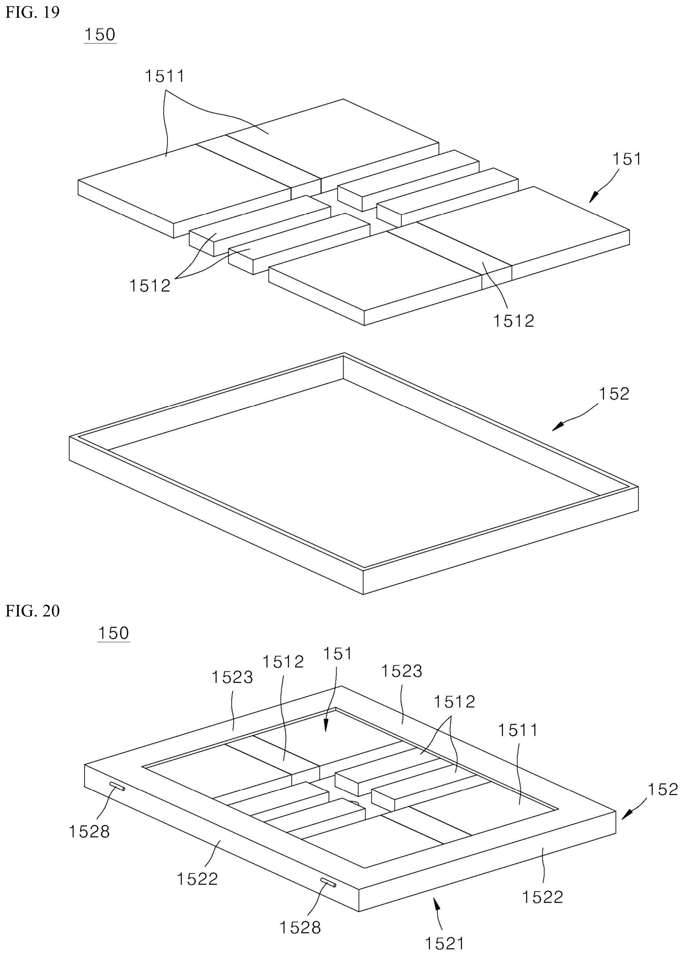

FIG. 18 is an exploded view of the upper supporter 130 and the ferrite module 150 according to an embodiment. FIG. 19 is an exploded view of the ferrite module 150 according to an embodiment. The ferrite module 150 may comprise the ferrite core 151 and the core fixing portion 152.

The ferrite core 151 may generate the magnetic field, and may include a plurality of pieces arranged as so to be spaced apart from each other. The core fixing portion 152 may be coupled to the upper supporter 130, may be formed by insert injection molding as the ferrite core 151 may be, and may fix the ferrite core 151.

The ferrite module 150 may be made of a ferrite material and may generate a magnetic field when a current is applied to the working coil 140a. The core fixing portion 152 may be made of a plastic material. each of the ferrite core 151 and the core fixing portion 152 may be manufactured by insert injection molding.

One ferrite module 150 may correspond to one working coil 140a. That is, one working coil 140a and one ferrite module 150 may constitute one set to generate the magnetic field.

In one ferrite module 150, a plurality of pieces of the ferrite core 151 may be arranged to be spaced apart from each other. A plurality of pieces constituting one ferrite core 151 may maintain positions thereof spaced apart from each other by the core fixing portion 152.

In an embodiment, the ferrite module 150 may be manufactured by forming each of the ferrite core 151 and the core fixing portion 152 made of a plastic material via insert injection molding and coupling the ferrite core 151 and the core fixing portion 152 to each other. Since the shape of the core fixing portion 152 is freely formed via the insert injection molding, the core fixing portion 152 may be easily manufactured into a shape corresponding to a shape of the seating groove 131 of the upper supporter 130 even when the ferrite pieces constituting the ferrite core 151 are formed in various shapes.

Accordingly, the ferrite pieces may be manufactured to have various shapes, and the core fixing portion 152 is manufactured to have a shape corresponding to that of the seating groove 131, such that the ferrite module 150 may be stably coupled to and mounted into the upper supporter 130.

FIG. 19 schematically illustrates a structure of the ferrite module 150. The ferrite module 150 illustrated in FIG. 19 is constructed such that the ferrite core 151 is composed of a plurality of pieces having different sizes, and the core fixing portion 152 is provided in a structure in which an upper surface thereof is opened and a lower surface of the ferrite core 151 is supported on the core fixing portion 152.

In the ferrite module 150 described below, the upper surface of the core fixing portion 152 may be at least partially opened like the structure of FIG. 19 schematically illustrated, and thus at least a portion of the ferrite core 151 disposed in the core fixing portion 152 may be disposed to face the coil substrate 140 disposed thereon.

Hereinafter, the structures of the ferrite core 151, the core fixing portion 152, and the ferrite module 150 including the ferrite core 151 and the core fixing portion 152 according to various embodiments will be described in detail. A structure of the ferrite core 151 may be of a first type, a second type, and a third type. Accordingly, the shape of the core fixing portion 152 may also be changed.

The structure of the ferrite core 151 may be formed in one of the first type in which a portion of an upper surface thereof is provided to be covered with the core fixing portion 152, the second type in which a fixing groove 1513 for fixing the ferrite core 151 to the core fixing portion 152 is formed therein, and the third type in which at least one inclined portion 1514 for fixing the ferrite core 151 to the core fixing portion 152 is formed at a corner thereof.

Hereinafter, the terms of the first type, the second type, and the third type may be used not only to distinguish the types of the ferrite core 151 from each other, but also to distinguish the types of the core fixing portions 152 having shapes corresponding to the types from each other, and to distinguish the types of the ferrite modules 150, each including the ferrite core 151 and the core fixing portion 152 coupled to each other.

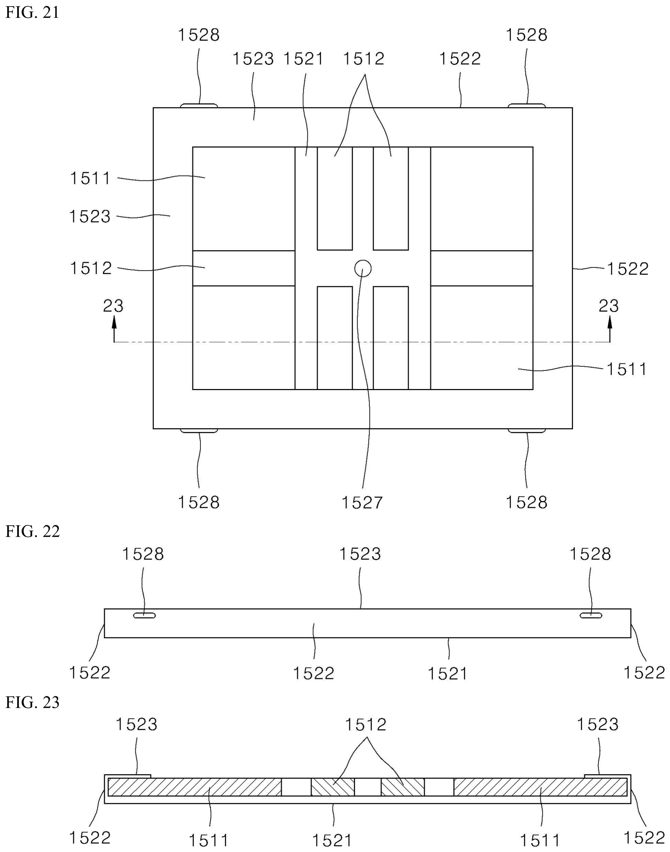

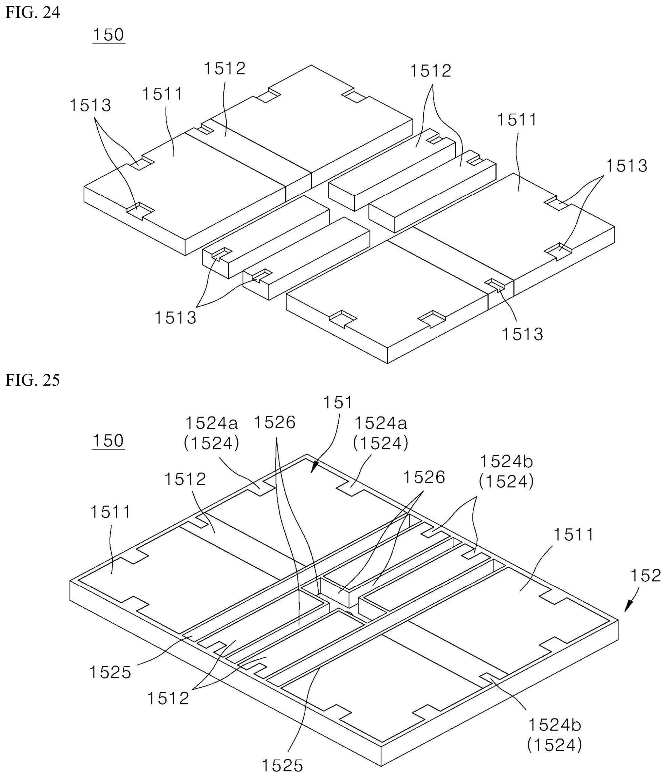

FIG. 20 is a perspective view of the ferrite module 150 according to another embodiment. FIG. 21 is a plan view of FIG. 20. FIG. 22 is a side view of FIG. 21. FIG. 23 is a cross-sectional view in a direction of 23-23 of FIG. 21. FIG. 24 is a perspective view illustrating the ferrite core 151 according to an embodiment.

FIGS. 20 to 24 illustrate the first type ferrite core 151. A structure common to the first type and the second type will be described first.

In the first type or the second type, the ferrite core 151 may comprise a first ferrite 1511 and a second ferrite 1512. Each first ferrite 1511 may be disposed on each corner of the core fixing portion 152 provided in a rectangular shape, and the first ferrite 1511 may include a plurality of first ferrites. At least one second ferrite 1512 may be disposed between adjacent ones of the plurality of first ferrites 1511 and may include a plurality of second ferrite.

The first ferrite 1511 may be generally formed in a plate shape having a predetermined thickness, and may have a generally rectangular parallelepiped shape. The second ferrite 1512 may be formed in a rod-shaped hexahedron having the same thickness as or similar to that of the first ferrite 1511 and having a smaller volume than that of the first ferrite 1511.

In addition, for example, as illustrated in FIG. 24, the first ferrite 1511 may be formed in a square shape, and the second ferrite 1512 may be formed in a rectangular shape. In this regard, a length of the long side of the second ferrite 1512 may be equal to the length of one side of the first ferrite 1511.

According to the structure of the first ferrite 1511 and the second ferrite 1512 according to the embodiment, the first ferrites 1511 and the second ferrites 1512 may be combined with each other such that the shape of the combination corresponds to the shape of the rectangular seating groove 131 formed in the upper supporter 130. Thus, each of the ferrite core 151 and the ferrite module 150 having the generally rectangular shape may be easily manufactured.

However, the shapes of the first ferrite 1511 and the second ferrite 1512 are not limited thereto, and may be formed in various other shapes. In addition, in an embodiment, two different types of ferrites having different shapes are provided in one ferrite module 150. However, the present disclosure is not limited thereto, and three or more different types of ferrites having different shapes may be provided in one ferrite module 150.

In an embodiment, the ferrite core 151 may comprise a plurality of ferrites having the same or different shapes. Each of the ferrite core 151 and the core fixing portion 152 may be formed via the insert-injection and the ferrite core 151 and the core fixing portion 152 may be coupled to each other to form the ferrite module 150. Due to the insert-injection, the specific shape of the core fixing portion 152 supporting and fixing the ferrite core 151 may be various, and the various structures of the core fixing portion 152 may be easily formed.

Therefore, the shape of the ferritic module 150 corresponding to that of the seating groove 131 of the upper supporter 130 may be easily manufactured by combining the ferrites having various sizes and shapes with each other, such that the productivity of the ferritic module 150 may be improved.

Some of the second ferrites 1512 may be disposed between adjacent ones of the plurality of first ferrites 1511 so as to be in contact with the first ferrites 1511, while the others of the second ferrites 1512 may be disposed between adjacent ones of the plurality of first ferrites 1511 so as to be spaced apart from the first ferrites 1511.

Due to this structure, each of the first ferrite 1511 and the second ferrite 1512 may have a substantially rectangular shape in consideration of an outer line.

For example, as described above, the working coil 140a may have a generally rectangular shape in consideration of an outer line. Accordingly, the first ferrites 1511 and the second ferrites 1512 may be combined with each other to form the ferrite core 151 formed in a generally rectangular shape, which may correspond to the shape of the working coil 140a having the rectangular shape.

Accordingly, the efficiency of generating the magnetic field using the working coil 140a and the ferrite core 151 may be improved. That is, as the percentage by which an area of the working coil 140a and an area of the ferrite core 151 overlap each other increases, the strength of the generated magnetic field increases. In the embodiment, the shapes of the outer lines of the working coil 140a and the ferrite core 151 are the quadrangular shapes and thus correspond to each other, such that the generation efficiency of the magnetic field may be improved compared to the case where the shapes of the outer lines thereof are different from each other.

In an area between the adjacent first ferrites 1511 where the first ferrite 1511 and the second ferrite 1512 are spaced apart from each other, a plurality of second ferrites 1512 may be disposed, and the plurality of second ferrite 1512 may be spaced apart from each other.

When the ferrite module 150 has the generally rectangular shape, the length in the transverse direction of the ferrite module 150 and the length in the longitudinal direction of the ferrite module 150 may be different from each other. In this case, the first ferrites 1511 and the second ferrites 1512 need to be combined with each other so that the entire shape of the ferrite core 151 has the rectangular shape.

In an embodiment, the first ferrite 1511 having the square shape is disposed on each of the corners of the core fixing portion 152, as illustrated in FIG. 21. In this regard, the ferrite module 150 has the rectangular shape having the longitudinal side longer than the transverse side, such that a considerable separation space may be defined between the first ferrites 1511 adjacent to each other in the longitudinal direction.

The plurality of second ferrites 1512, for example, two second ferrites 1512 arranged so as to be spaced apart from each other may be disposed in the separation space. Thus, the outer line of the ferrite core 151 may have a substantially rectangular shape.

In the first type, the core fixing portion 152 may comprise a bottom plate 1521, a bent portion 1522, and an extension portion 1523. The bottom plate 1521 may constitute a lower surface of the core fixing portion 152 and close the lower surface of the core fixing portion 152. The lower surfaces of the first ferrite 1511 and the second ferrite 1512 may be stably supported on the bottom plate 1521.

The bent portion 1522 may be bent upwardly from the side edge of the bottom plate 1521. The bent portion 1522 may extend upwardly from the bottom plate 1521 to define a space defined by the bent portion and the bottom plate in which the first ferrite 1511 and the second ferrite 1512 are received.

The extension portion 1523 may be bent from the bent portion 1522 so as to extend horizontally and inwardly of the bent portion, and may cover a portion of an upper surface of each of the first ferrite 1511 and the second ferrite 1512. The extension portion 1523 may constitute the upper surface of the core fixing portion 152 and extend along an outer periphery of the core fixing portion 152.

The extension portion 1523 may cover the portion of the upper surface of each of the first ferrite 1511 and the second ferrite 1512 to secure the first ferrite 1511 and the second ferrite 1512 so as not to be removed from the core fixing portion 152.

Since the upper surface of the core fixing portion 152 in an area other than the extension portion 1523 is open, a portion of the ferrite core 151 overlapping the open upper surface faces the coil substrate 140 disposed thereon, thereby improving magnetic field generation efficiency.

In one example, an injection-molded plastic material may fill a space between the extension portion 1523 and the bottom plate 1521 in which the first ferrite 1511 and the second ferrite 1512 are not disposed. Accordingly, the first ferrite 1511 and the second ferrite 1512 may be stably fixed to the core fixing portion 152.

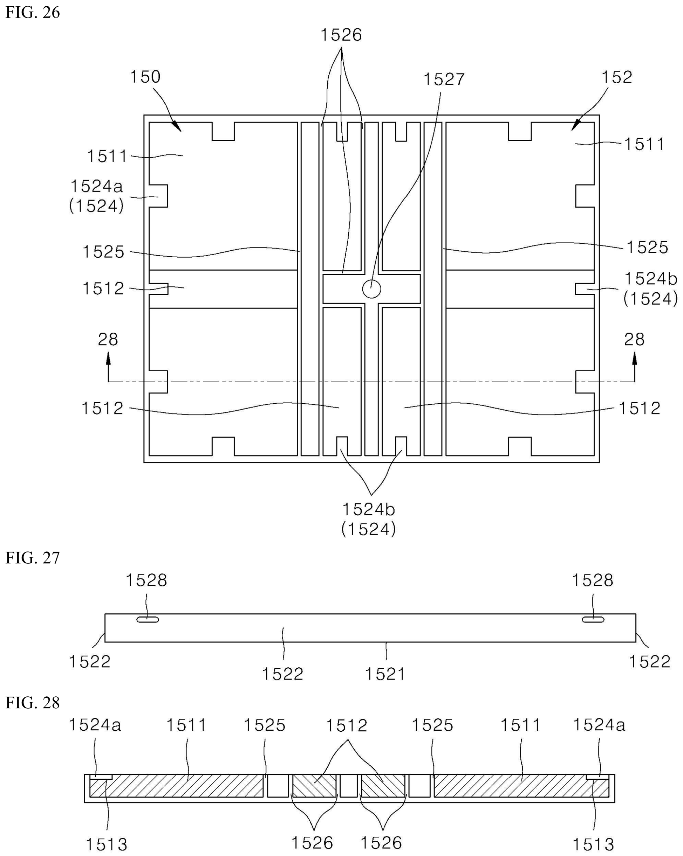

FIG. 25 is a perspective view of the ferrite module 150 according to another embodiment. FIG. 26 is a plan view of FIG. 25. FIG. 27 is a side view of FIG. 25. FIG. 28 is a cross-sectional view in a direction of 28-28 of FIG. 26.

FIGS. 25 to 28 illustrate the second type of the ferrite core 151. Hereinafter, a description duplicate with the description of the first type may be omitted. In FIG. 24, both the first type and the second type of ferrite core 151 may be combined with each other. The difference between the first type and the second type is about the presence or absence of the fixing groove 1513.

In the second type of the ferrite core 151, the fixing groove 1513 may be recessed in each of the first ferrite 1511 and the second ferrite 1512. In the second type, the fixing groove 1513 may be formed in an end of each of the first ferrite 1511 and the second ferrite 1512.

Since the core fixing portion 152 is coupled to the end of each ferrite, the fixing groove 1513 coupled to the fixing protrusion 1524 of the core fixing portion 152 may be formed in the edge side of each ferrite.

The width and number of the fixing grooves 1513 may vary depending on the volume, area, and shape of each of the first ferrite 1511 and the second ferrite 1512.

In the second ferrite 1512 having a relatively small volume and area and generally having a rod shape, a space in which the fixing groove 1513 may be formed is limited. Thus, for example, one fixing groove 1513 may be formed at one end in the longitudinal direction of the second ferrite 1512. In addition, the fixing groove 1513 having a relatively smaller width may be formed in the second ferrite 1512.

The first ferrite 1511 having a relatively large volume and area and having a generally square shape may have a plurality of fixing grooves 1513 formed therein.

In the first ferrite 1511, the plurality of fixing grooves 1513 may be formed in respective two sides of the second ferrite 1512 disposed in an outer area of the ferrite module 150 and intersecting each other. In addition, the fixing groove 1513 having a relatively larger width may be formed in the first ferrite 1511.

Accordingly, the first ferrite 1511 having a relatively large volume and area may be stably fixed to the core fixing portion 152 using the plurality of fixing grooves 1513 of the above-described form.

The core fixing portion 152 corresponding to the structure of the second type may comprise the bottom plate 1521, the bent portion 1522, and the fixing protrusion 1524. The bottom plate 1521 and the bent portion 1522 are the same as described above.

The fixing protrusion 1524 may be bent from the bent portion 1522 so as to extend horizontally, and may be coupled to the fixing groove 1513. In the insert injection molding, the insert injection-molded product made of a plastic material may be introduced into the bent portion 1522 and cured to form the fixing protrusion 1524.

The first ferrite 1511 is constructed to have an area greater than that of the second ferrite 1512, and thus, as described above, the width of the fixing groove 1513 of the first ferrite 1511 may be greater than the width of the fixing groove 1513 of the second ferrite 1512. Correspondingly, the fixing protrusion 1524 may comprise a first sub-protrusion 1524a and a second sub-protrusion 1524b having different sizes.

The first sub-protrusion 1524a may be disposed at a position where it is coupled to the first ferrite 1511. The second sub-protrusion 1524b may be disposed at a position where it is coupled to the second ferrite 1512.

The width of the first sub-protrusion 1524a may be sized to be greater than the width of the second sub-protrusion 1524b. As described above, the width of the fixing groove 1513 of the first ferrite 1511 is sized to be greater than the width of the fixing groove 1513 of the second ferrite 1512, such that the width of the first sub-protrusion 1524a coupled to the fixing groove 1513 of the first ferrite 1511 may be relatively larger, and the width of the second sub-protrusion 1524b coupled to the fixing groove 1513 of the second ferrite 1512 may be relatively smaller.

In the second type, the area of the fixing protrusion 1524 is smaller than that of the extension portion 1523 of the first type. Thus, an area of the upper surface of the ferrite core 151 is exposed to the outside may be larger than that in the first type. Accordingly, the ferrite module 150 including the second type of the ferrite core 151 may have improved magnetic field generation efficiency compared to that in the first type.

However, in the second type, since the fixing groove 1513 is formed in each ferrite, and each of a first fixing wall 1525 and a second fixing wall 1526 to be described later is comprised in order to stably fix each of the first and second ferrites to the core fixing portion 152, the overall structure may be complicated compared to the structure of the first type.

Each of the first fixing protrusion 1524 and the second fixing protrusion 1524 have a significantly smaller area than an area of each of the first ferrite 1511 and the second ferrite 1512. Due to this structure, the first fixing protrusion 1524 and the second fixing protrusion 1524 may not be stably fixed to the core fixing portion 152.

Accordingly, the core fixing portion 152 corresponding to the second type ferrite core 151 may comprise the first fixing wall 1525 and the second fixing wall 1526 in order to stably fix the first fixing protrusion 1524 and the second fixing protrusion 1524 to the core fixing portion so as not to deviate from the designed position.

Each of the first fixing wall 1525 and the second fixing wall 1526 may be in contact with at least a portion of a side surface of each of the first ferrite 1511 and the second ferrite 1512 to fix the position of each of the first and second ferrites and to couple each of the first ferrite 1511 and the second ferrite 1512 to the core fixing portion 152.

The first fixing wall 1525 may be formed on the edge of the first ferrite 1511 so as to protrude from the bottom plate 1521. The first fixing wall 1525 may include a pair of first fixing walls spaced apart from each other. The first fixing wall 1525 may be in contact with portions of the first ferrite 1511 and the second ferrite 1512 contacting the first ferrite 1511 to fix the first ferrite 1511 and the second ferrite 1512.

The second fixing wall 1526 may be disposed between the pair of first fixing walls 1525 spaced from each other, may be formed to protrude from the bottom plate 1521, may be formed to surround the plurality of second ferrites 1512, and may fix the second ferrites 1512.

The first fixing wall 1525 and the second fixing wall 1526 may be formed so as to be in contact with the side surfaces of the ferrites and not to cover the upper surfaces of the ferrites. Accordingly, the upper surfaces of the ferrites except for the portion thereof which the fixing protrusion 1524 overlaps may be entirely exposed, thereby improving the magnetic field generation efficiency of the ferrite module 150.

The first ferrite 1511 and the second ferrite 1512 may be stably fixed to the core fixing portion 152 using the first sub-protrusion 1524a, the second sub-protrusion 1524b, the first fixing wall 1525, and the second fixing wall 1526, and may be maintained in a designed position.

In the first type and the second type, the ferrite module 150 may have the structure fixedly fastened to the upper supporter 130 in a state of being seated in the seating groove 131. Such a structure may be provided as, for example, a fastening hole 1527 or a fastening protrusion 1528. The core fixing portion 152 may comprise at least one of the fastening hole 1527 or the fastening protrusion 1528

The core fixing portion 152 may comprise the fastening hole 1527 which may be formed at a central area thereof and may be formed to pass through the bottom plate 1521 of the core fixing portion 152. A fastening means is fastened to the fastening hole 1527. In one example, a screw fastening structure such as a hole or a groove may be formed in the lower surface of the upper supporter 130 under the seating groove 131 at a position corresponding to a position of the fastening hole 1527. The fastening means may pass through the fastening hole 1527 and the screw fastening structure.

The fastening means such as a screw bolt or a screw nail may be inserted into the coupling hole 1527 and the screw fastening structure to fasten the core fixing portion 152 to the upper supporter 130.

The core fixing portion 152 may comprise a fastening protrusion 1528 protruding from an outer surface of the bent portion 1522 bent from the end of the bottom plate 1521 of the core fixing portion 152 and fastened to the upper supporter 130. For example, the fastening protrusions 1528 may protrude from the outer surfaces of a pair of bent portions 1522 disposed at positions facing each other, and one bent portion 1522 may include a plurality of bent portions.

A hole or groove into which the fastening protrusion 1528 is fitted may be formed in a wall of the upper supporter 130 which defines the seating groove 131. A shape, a position and the number of the hole or groove may correspond to the shape, the position, and the number of the fastening protrusion 1528.

The fastening protrusion 1528 may be coupled to the hole or groove formed in the upper supporter 130 in a shape fitting or interference fitting manner. Therefore, the ferrite module 150 including the core fixing portion 152 may be easily attached to and detached from the upper supporter 130.

The coupling using the fastening protrusion 1528 has an advantage in that the ferrite module 150 may be easily attached to and detached from the upper supporter 130. In one example, the scheme of fastening the fastening means to the coupling hole 1527 has an advantage in that the ferrite module 150 may be stably and firmly coupled to the upper supporter 130, and the ferrite module 150 may be attached to and detached from the upper supporter 130.

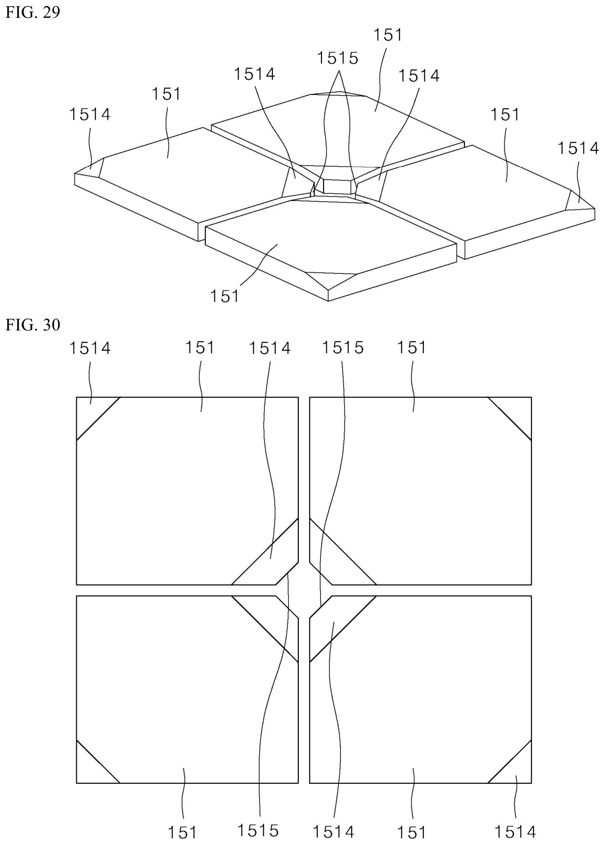

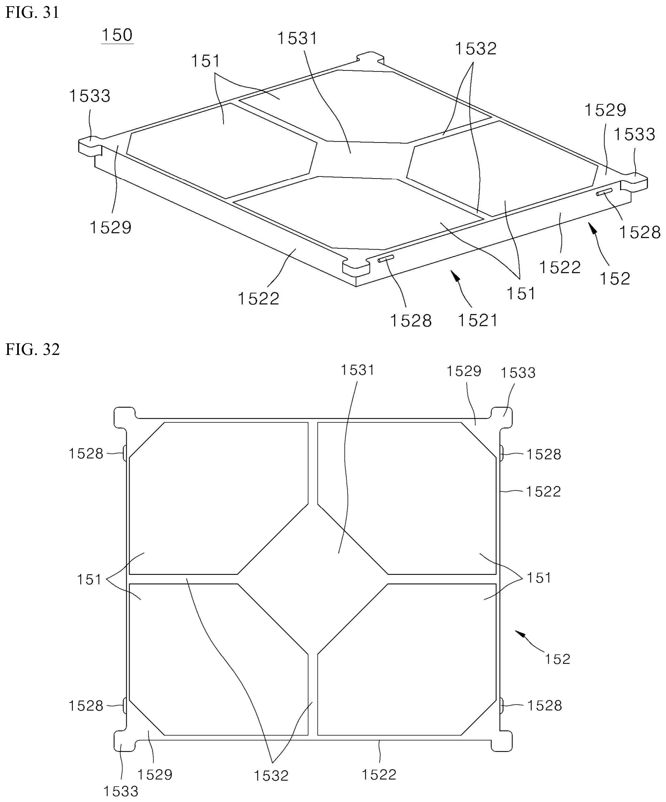

FIG. 29 is a perspective view of the ferrite core 151 according to another embodiment. FIG. 30 is a plan view of FIG. 29. FIG. 31 is a perspective view of the ferrite module 150 according to another embodiment. FIG. 32 is a plan view of FIG. 31. FIGS. 29 to 32 illustrate a third type ferrite core 151.

In the third type, the ferrite module 150 may be formed in a substantially square shape. Accordingly, a frame shape of the seating groove 131 in which the ferrite module 150 is seated may also be formed in a substantially square shape.

In the third type, a plurality of ferrite cores 151 may be provided, and the plurality of ferrite cores 151 may be radially arranged around the center of the core fixing portion 152 so as to be spaced apart from each other.

The ferrite core 151 may be composed of a plurality of pieces, and the ferrite cores 151 may be radially arranged to constitute one ferrite core 151. Hereinafter, the ferrite core 151 may refer to each of a plurality of pieces.

In the third type, the ferrite cores 151 arranged around the center of the core fixing portion 152 may have the same or extremely similar shape. The same shaped ferrite cores 151 may be arranged around the center of the core fixing portion 152 so as to be spaced apart from each other, such that the ferrite cores 151 may be in a radial arrangement with each other such that the arrangement is symmetrical with each other in both the longitudinal and transverse directions.

Accordingly, the inclined portions respectively formed in the plurality of ferrite cores 151 may be radially arranged around the center of the core fixing portion 152. Due to this structure, each ferrite core 151 may be stably and uniformly fixed to the core fixing portion 152 using each of the inclined portions 1514 regularly arranged in all of the plurality of ferrite cores 151.

The ferrite core 151 may be formed in a quadrilateral shape, and more specifically, may be formed in a square shape. In the third type, the inclined portion 1514 may be formed in the ferrite core 151.

The inclined portion 1514 may be provided as a pair of inclined portion 1514 respectively formed at two corners of each ferrite core 151 at positions arranged with each other in a diagonal direction. A portion of the core fixing portion 152 may cover the inclined portion 1514, and accordingly, the ferrite core 151 may be fixed to the core fixing portion 152.

In the insert injection molding, the insert injection-molded product made of a plastic material may be introduced into areas on top of the inclined portions 1514 and cured to form a first cover 1529 and a second cover 1531 to be described later, and accordingly, the ferrite core 151 may be stably coupled and fixed to the core fixing portion 152 using the first cover 1529 and the second cover 1531.

A chamfered portion 1515 may be formed in each of the ferrite cores 151 at each of inner edges of the plurality of ferrite cores 151 facing each other. The chamfered portion 1515 may be formed at the corner at which the inclined portion 1514 is formed.

Accordingly, when the plurality of ferrite cores 151 are placed, as illustrated in FIG. 30, a space a rhombic shape may be formed in the center of the entire ferrite core 151 composed of the plurality of ferrite cores 151 as the plurality of ferrite pieces.

In the insert injection molding, an injection molded product integrally formed with the bottom plate 1521 may be deposited in such a rhombus-shaped space, so that the ferrite core 151 may be firmly supported. The insert injection-molded product may be connected to the second cover 1531 to be described later.

The core fixing portion 152 corresponding to the third type ferrite core 151 may comprise the bottom plate 1521, the bent portion 1522, the first cover 1529, the second cover 1531, and a separation wall 1532. The bottom plate 1521 and the bent portion 1522 are the same as described above.

The first cover 1529 may be formed at the outer corner of the core fixing portion 152, may be provided to cover the inclined portion 1514, and may fix the ferrite core 151. The second cover 1531 may be formed at a central portion of the core fixing portion 152, may be provided to cover the inclined portion 1514 at which the chamfered portion 1515 is formed, and may fix the ferrite core 151.

The first cover 1529 and the second cover 1531 may be respectively disposed at positions corresponding to the two corners arranged in the diagonal direction of each of the ferrite cores 151, and may fix the two corners of the ferrite core 151, respectively, so that the ferrite core 151 may be stably and firmly coupled to the core fixing portion 152.

The inclined portions 1514 may be respectively formed in the ferrite core 151 at positions corresponding to the first cover 1529 and the second cover 1531, respectively. The first cover 1529 and the second cover 1531 respectively cover the inclined portions 1514 to couple the ferrite core 151 to the core fixing portion 152, such that the height of the ferrite core 151 and the height of the core fixing portion 152 are similar to each other, and thus the upper surface of the ferrite module 150 may have a substantially flat shape.

Since the upper surface of the ferrite module 150 is flat, the coil substrate 140 may be easily and stably disposed on the flat upper surface of the ferrite module 150, and at the same time, a gap between the ferrite module 150 and the coil substrate 140 may be significantly reduced.

The separation wall 1532 protrudes from the bottom plate 1521, connects the bent portion 1522 and the second cover 1531 to each other, and is disposed between adjacent ones of the plurality of ferrite cores 151 to separate the adjacent ones of the plurality of ferrite cores 151 from each other.

The separation wall 1532 formed between the adjacent ferrite cores 151 may contact the side surface of each of the adjacent ferrite cores 151 to more firmly couple each of the ferrite cores 151 to the core fixing portion 152. In addition, the separation wall 1532 may limit the movement of each ferrite core 151 in the lateral direction of the core fixing portion 152. Accordingly, the separation wall 1532 may maintain a state in which the ferrite cores 151 are respectively positioned in designed positions, and may suppress the displacement of the ferrite cores.

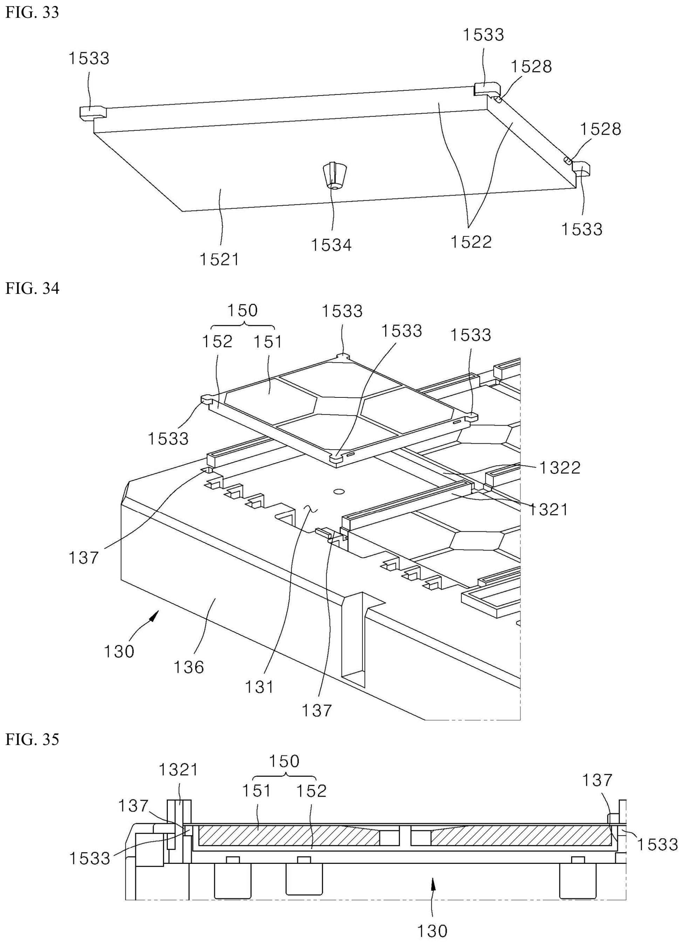

FIG. 33 is a bottom perspective view of the ferrite module 150 illustrated in FIG. 29. FIG. 34 is an exploded view of the upper supporter 130 and the ferrite module 150 shown in FIG. 29. FIG. 35 is a cross-sectional view of a portion of the electric stove.

In the third type, in order to couple the ferrite module 150 to the upper supporter 130, for example, the core fixing portion 152 may be provided with at least one of a fastening protrusion 1528 or a central protrusion 1534.

As described above, the fastening protrusions 1528 may protrude from the outer side surfaces of, for example, a pair of bent portions 1522 facing each other, and a plurality of fastening protrusions 1528 may be formed on one bent portion 1522.

A hole or groove into which the fastening protrusion 1528 is fitted may be formed in the wall of the upper supporter 130 which defines the seating groove 131 and at a position corresponding to a position of the fastening protrusion 1528. The shape and number of the holes or grooves may correspond to the shape and number of the fastening protrusions 1528.

The core fixing portion 152 may comprise the central protrusion 1534 protruding from the lower surface of the core fixing portion 152 at the central portion thereof and fitted into the hole formed in the upper supporter 130.

The central protrusion 1534 may be fitted into the hole or groove formed in a central portion of the bottom of the upper supporter 130 under the seating groove 131, and accordingly, the ferrite module 150 may be detachably coupled to the upper supporter 130. In order to prevent the central protrusion 1534 from being easily removed from the upper supporter 130 in a state in which it is coupled to the upper supporter 130, for example, the central protrusion 1534 may be formed in a form of a hook.

The core fixing portion 152 may comprise a fitting protrusion 1533 formed at the corner of the core fixing portion 152 and protruding from the bent portion 1522 outwardly of the core fixing portion 152. The fitting protrusion 1533 is fitted to the upper supporter 130.

The fitting protrusion 1533 may be provided so that the ferrite module 150 is stably mounted in the seating groove 131 and the ferrite module 150 is prevented from deviating from the correct position or being removed from the seating groove 131 under an external impact.

Since each fitting protrusion 1533 is disposed at each corner of the core fixing portion 152 having a rectangular shape, for example, a total of four fitting protrusions 1533 may be provided. The fitting protrusion 1533 may be integrally formed with the first cover 1529 while being positioned at a position where the first cover 1529 is formed.

A fitting groove 137 into which the fitting protrusion 1533 is fitted may be formed in the upper supporter 130 at a position corresponding to a position of the fitting protrusion 1533. The fitting groove 137 may be formed by recessing a portion of the upper supporter 130 in each of corners of the seating groove 131 defined by the rectangular frame.

The fitting protrusion 1533 and the fitting groove 137 may be coupled to each other in a shape fitting manner. When the fitting protrusion 1533 is coupled to the fitting groove 137, rotation or lateral movement of the core fixing portion 152 may be effectively restricted, and thus the core fixing portion 152 may be maintained in a state in which it is placed in a designed position.

Therefore, even when an external impact is applied to the electric stove, the ferrite module 150 is not easily displaced under the external impact, and thus the assembly and performance of the electric stove may be improved.

In an embodiment, the ferrite module 150 may be provided in various structures of the first type, the second type, and the third type. The types may have the differences in structure and have own features thereof. Accordingly, the manufacturer selects and designs the type of the ferrite module 150 suitable for the characteristics of each electric stove, thereby easily manufacturing the ferrite module 150, improving magnetic field generation efficiency, and reducing the manufacturing cost.

Although the present disclosure has been described above with reference to the drawings, the present disclosure is not limited to the embodiments disclosed herein and the drawings, and it is obvious that various modifications may be made thereto by those skilled in the art within the scope of the technical idea of the present disclosure. In addition, even when the effects according to the configurations of the present disclosure were not explicitly described while describing the embodiments of the present disclosure, it is obvious that the effects predictable from the configurations should also be acknowledged.

## Claims

1. An electric stove comprising:
a cover plate having an upper surface on which an heating target is disposed;
an upper supporter disposed under the cover plate;
a plurality of coil substrates disposed on top of the upper supporter and arranged to be spaced apart from each other, wherein a working coil is printed on each of plurality of coil substrates; and
a plurality of ferrite modules disposed on top of the upper supporter, disposed under the coil substrate, and disposed at positions corresponding to positions of the plurality of coil substrates, respectively,
wherein each of the ferrite modules comprises:
a ferrite core generating a magnetic field and being composed of a plurality of pieces spaced apart from each other; and
a core fixing portion coupled to the upper supporter and fixing the ferrite core.

2. The electric stove of claim 1, wherein the ferrite core is formed in one of first to third types,
wherein in the first type, a portion of an upper surface of the ferrite core is covered with the core fixing portion,
wherein in the second type, a fixing groove for fixing the ferrite core to the core fixing portion is defined in the ferrite core,
wherein in the third type, at least one inclined portion for fixing the ferrite core to the core fixing portion is formed in a corner of the ferrite core.

3. The electric stove of claim 2, wherein in the first type or the second type, the ferrite core comprises:
a plurality of first ferrites respectively disposed on corners of the core fixing portion; and
a plurality of second ferrites, wherein at least one of the plurality of second ferrites is disposed between adjacent ones of the plurality of first ferrites.

4. The electric stove of claim 3, wherein some of the second ferrites are disposed between adjacent ones of the plurality of first ferrites so as to contact the first ferrites,
wherein the others of the second ferrites are disposed between adjacent ones of the plurality of first ferrites so as to be spaced apart from the first ferrites.

5. The electric stove of claim 4, wherein the others of the second ferrites disposed in an area where the first ferrite and the second ferrite are spaced apart from each other include at least two second ferrites arranged to be spaced apart from each other.

6. The electric stove of claim 5, wherein in the first type, the core fixing portion comprises:
a bottom plate;
a bent portion bent from an end of the bottom plate; and
an extension portion bent from the bent portion so as to extend to cover a portion of an upper surface of each of the first ferrite and the second ferrite.

7. The electric stove of claim 5, wherein in the second type, the fixing groove is formed in an end of each of the first ferrite and the second ferrite,
wherein the core fixing portion comprises:
a bottom plate;
a bent portion bent from an end of the bottom plate; and
a fixing protrusion bent from the bent portion so as to extend to be coupled to the fixing groove.

8. The electric stove of claim 3, wherein the core fixing portion comprises a fastening hole formed in a central area thereof and formed to extend through a bottom plate of the core fixing portion, wherein a fastening means is fastened to the fastening hole.

9. The electric stove of claim 3, wherein the core fixing portion comprises a fastening protrusion protruding from an outer side surface of a bent portion bent from an end of the bottom plate of the core fixing portion, wherein the fastening protrusion is fastened to the upper supporter.

10. The electric stove of claim 3, wherein the first ferrite is formed in a square shape, and the second ferrite is formed in a rectangular shape,
wherein a length of a long side of the second ferrite is equal to a length of one side of the first ferrite.

11. The electric stove of claim 2, wherein in the third type, the ferrite core includes a plurality of ferrite cores,
wherein the plurality of ferrite cores are radially arranged around a center of the core fixing portion so as to be spaced apart from each other.

12. The electric stove of claim 2, wherein in the third type, the ferrite core includes a plurality of ferrite cores,
wherein the plurality of ferrite cores are arranged around a center of the core fixing portion so as to have the same shape.

13. The electric stove of claim 12, wherein the inclined portions respectively formed in the plurality of ferrite cores are radially arranged around a center of the core fixing portion.

14. The electric stove of claim 11, wherein the inclined portion includes a pair of inclined portions respectively formed at two corners arranged in a diagonal direction of the ferrite core.

15. The electric stove of claim 11, wherein each chamfered portion is formed at each of respective corners of the plurality of ferrite cores facing each other,
wherein the chamfered portion is formed at the corner at which the inclined portion is formed.

16. The electric stove of claim 15, wherein the core fixing portion comprises:
a bottom plate;
a bent portion bent from an end of the bottom plate;
a first cover formed at a corner of the core fixing portion and constructed to cover the inclined portion, wherein the first cover fixes the ferrite core;
a second cover formed in a central area of the core fixing portion and constructed to cover the inclined portion at which the chamfered portion is formed, wherein the second cover fixes the ferrite core; and
a separation wall protruding from the bottom plate and connecting the bent portion and the second cover, wherein the separation wall is disposed between adjacent ones of the plurality of ferrite cores to separate the adjacent ones from each other.

17. The electric stove of claim 16, wherein the core fixing portion comprises a fitting protrusion formed at a corner of the core fixing portion and protruding from the bent portion outwardly of the core fixing portion, wherein the fitting protrusion is fitted into the upper supporter.

18. The electric stove of claim 17, wherein a fitting groove into which the fitting protrusion is fitted is formed in the upper supporter and at a position corresponding to a position of the fitting protrusion.

19. The electric stove of claim 11, wherein the core fixing portion comprises a central protrusion formed in a central area thereof and protruding from a lower surface of the core fixing portion, wherein the central protrusion is fitted into a hole formed in the upper supporter.

20. The electric stove of claim 1, wherein the core fixing portion and the ferrite core are formed in an insert injection molded manner.
